# EUROPÄISCHE PATENTSCHRIFT

(11) **EP 4 060 169 B1**
(45) Veröffentlichungstag und Bekanntmachung des Hinweises auf die Patenterteilung: **03.04.2024**
(21) Anmeldenummer: 22156010.5
(22) Anmeldetag: 10.02.2022
(51) Int. Cl.: F01N 3/20, F01N 3/027

(54) **ABGASHEIZER**
EXHAUST HEATER
CHAUDIÈRE À GAZ D'ÉCHAPPEMENT

(30) Priorität: 15.03.2021 DE 102021106168; 16.04.2021 DE 102021109568
(43) Veröffentlichungstag der Anmeldung: 21.09.2022
(73) Patentinhaber: Purem GmbH, 66539 Neunkirchen (DE)
(72) Erfinder: Uysal, Fatih, Plochingen (DE); Höckel, Sandra, Esslingen am Neckar (DE); Kuschel, Dietmar, Murr (DE)
(74) Vertreter: Ruttensperger Lachnit Trossin Gomoll

(56) Entgegenhaltungen:
- EP-A1- 0 608 783
- WO-A1-2004/112433
- DE-A1-102020 123 376

## Beschreibung

Die vorliegende Erfindung betrifft einen Abgasheizer für eine Abgasanlage einer Brennkraftmaschine, wie zum Beispiel offenbart in WO2004112433A1, umfassend eine Trägeranordnung und eine an der Trägeranordnung getragene, vom Abgas in einer Abgas-Hauptströmungsrichtung durchströmbare Heizleiteranordnung mit wenigstens einen stromdurchflossenen Heizleiter, wobei der wenigstens eine Heizleiter durch Heraustrennen aus einem Metall-Flachmaterial bereitgestellt ist.

Ein derartiger Abgasheizer ist auch aus der nachveröffentlichten deutschen Patentanmeldung DE 10 2020 123 376 bekannt. Durch das Bereitstellen eines zwischen zwei Trägerelementen getragenen Heizleiters durch Heraustrennen aus einem Metall-Flachmaterial, beispielsweise durch Ausschneiden oder Ausstanzen eines derartigen Heizleiters aus einem plattenartigen Rohling des Metall-Flachmaterials, wird es möglich, einen derartigen Heizleiter mit nahezu beliebigem, vergleichsweise komplexem Verlauf und insbesondere auch variierender Querschnittsfläche und somit auch lokal variierendem Widerstand bereitzustellen und diesen somit an die in einem Abgasführungsgehäuse einer Abgasanlage vorhandenen Strömungsverhältnisse anzupassen.

Es ist die Aufgabe der vorliegenden Erfindung, einen Abgasheizer für eine Abgasanlage einer Brennkraftmaschine vorzusehen, welcher eine erhöhte Effizienz bei der Übertragung von Wärme auf diesen durchströmendes Abgas aufweist. Erfindungsgemäß wird diese Aufgabe gelöst durch einen Abgasheizer für eine Abgasanlage einer Brennkraftmaschine, umfassend eine Trägeranordnung und eine an der Trägeranordnung getragene, vom Abgas in einer Abgas-Hauptströmungsrichtung durchströmbare Heizleiteranordnung mit wenigstens einem stromdurchflossenen Heizleiter, wobei der wenigstens eine Heizleiter durch Heraustrennen aus einem Metall-Flachmaterial bereitgestellt ist,
wobei:
- die Heizleiteranordnung wenigstens zwei in der Abgas-Hauptströmungsrichtung aufeinander folgend angeordnete Heizleiter umfasst, oder/und
- die Trägeranordnung wenigstens ein Trägerelement mit einem bezüglich einer Abgasheizer-Mittenachse radial außen liegenden, zur Festlegung an einem Abgasführungsgehäuse ausgebildeten Befestigungsbereich umfasst, wobei der Befestigungsbereich einen radial außen liegenden Leiterbereich wenigstens eines Heizleiters der Heizleiteranordnung in wenigstens einem, vorzugsweise mehreren Umfangsbereichen wenigstens teilweise nicht radial überlappt.

Durch das Vorsehen mehrerer Heizleiter in der Abgas-Hauptströmungsrichtung aufeinander folgend wird die Oberfläche, an welcher Wärme auf das den Abgasheizer durchströmendes Abgas übertragen werden kann, deutlich vergrößert, wobei aufgrund des Umstandes, dass der Heizleiter selbst durch Heraustrennen aus einem Metall-Flachmaterial bereitgestellt ist, durch das Anordnen mehrerer derartiger Heizleiter hintereinander die Baugröße einer so aufgebauten Abgasheizung nicht wesentlich zunimmt. Bei derartiger Ausgestaltung können die verschiedenen grundsätzlich nicht mit einer elektrischen Isolierung ummantelten Heizleiter aus gleichen oder unterschiedlichen elektrisch leitenden Materialien aufgebaut sein und können so gestaltet bzw. angeordnet sein, dass sie gezielt eine Beeinflussung der Strömungsführung des Abgasstroms bewirken. Auch können verschiedene Heizleiter verschieden gestaltet sein, beispielsweise auch unterschiedlich dimensioniert sein, um beispielsweise an eine Anpassung an eine trichterartige Struktur eines Abgasführungsgehäuses zu erreichen

Durch das Ausgestalten der Trägeranordnung derart, dass diese in einem Umfangsbereich oder mehreren Umfangsbereichen einen Heizleiter zumindest teilweise nicht radial überlappt, diesen also zumindest teilweise nicht gegen die Anströmung bzw. Umströmung mit Abgas abschirmt, wird auch im radial äußeren Bereich die Möglichkeit bereitgestellt, eine thermische Wechselwirkung zwischen dem Abgas und einem Heizleiter bereitzustellen, so dass auch mit dieser Maßnahme ohne Zunahme der Baugröße die zur Wärmeübertragung effizient nutzbare Oberfläche des Heizleiters vergrößert werden kann.

Jede der beiden vorangehend erläuterten Maßnahmen führt für sich alleine zu einem erhöhten Wärmeübertragungsvermögen eines so aufgebauten Abgasheizers und kann daher gemäß den Prinzipien der vorliegenden Erfindung eigenständig in einem Abgasheizer realisiert sein. Besonders vorteilhaft ist es, wenn beide Maßnahmen in Kombination in einem Abgasheizer vorgesehen sind.

Um in der von Abgas durchströmbaren Querschnittsfläche eines Abgasführungsgehäuses eine möglichst große Oberfläche des Heizleiters zur thermischen Wechselwirkung mit dem Abgas zu erreichen, wird vorgeschlagen, dass wenigstens ein, vorzugsweise jeder Heizleiter der Heizleiteranordnung wenigstens bereichsweise windungsartig sich erstreckend ausgebildet ist. Hierzu kann beispielsweise vorgesehen sein, dass wenigstens ein, vorzugsweise jeder Heizleiter der Heizleiteranordnung wenigstens ein Mäander-Windungsfeld, vorzugsweise eine Mehrzahl von in Umfangsrichtung aufeinander folgenden Mäander-Windungsfeldern, umfasst, wobei jedes Mäander-Windungsfeld eine Mehrzahl von bezüglich der Abgasheizer-Mittenachse radial aufeinander folgend angeordneten, im Wesentlichen in Umfangsrichtung sich erstreckenden Mäander-Windungsabschnitten umfasst, wobei wenigstens ein, vorzugsweise mehrere Mäander-Windungsabschnitte in einem ersten Umfangsende an einen radial weiter innen positionierten Mäander-Windungsabschnitt anschließen oder/und in einem zweiten Umfangsende an einen radial weiter außen positionierten Mäander-Windungsabschnitt anschließen.

Bei Ausgestaltung der Heizleiteranordnung mit wenigstens zwei in der Abgas-Hauptströmungsrichtung aufeinander folgend angeordneten Heizleitern können wenigstens zwei Heizleiter zueinander elektrisch seriell geschaltet sein oder/und können wenigstens zwei Heizleiter zueinander elektrisch parallel geschaltet sein.

Zur elektrischen Verbindung der Heizleiter mit einer Spannungsquelle bzw. miteinander wird vorgeschlagen, dass bei einem ersten Heizleiter der wenigstens zwei Heizleiter ein radial äußerer Mäander-Windungsabschnitt eines Mäander-Windungsfelds einen ersten Anschlussbereich des ersten Heizleiters bereitstellt und ein radial äußerer Mäander-Windungsabschnitt eines anderen Mäander-Windungsfelds einen zweiten Anschlussbereich des ersten Heizleiters bereitstellt, dass bei einem zweiten Heizleiter der wenigstens zwei Heizleiter ein radial äußerer Mäander-Windungsabschnitt eines Mäander-Windungsfelds einen ersten Anschlussbereich des zweiten Heizleiters bereitstellt und ein radial äußerer Mäander-Windungsabschnitt eines anderen Mäander-Windungsfelds einen zweiten Anschlussbereich des zweiten Heizleiters bereitstellt, und dass bei dem ersten Heizleiter und dem zweiten Heizleiter jeweils wenigstens ein Anschlussbereich von erstem Anschlussbereich und zweitem Anschlussbereich einen Spannungsquellen-Anschlussbereich zum Anschluss der Heizleiteranordnung an eine Spannungsquelle bereitstellt oder/und bei dem ersten Heizleiter und dem zweiten Heizleiter jeweils ein Anschlussbereich von erstem Anschlussbereich und zweitem Anschlussbereich einen Verbindungs-Anschlussbereich zur seriellen elektrischen Verbindung des ersten Heizleiters mit dem zweiten Heizleiter bereitstellt.

Die effiziente Umströmung der Heizleiter mit Abgas kann weiter dadurch verbessert werden, dass bei Ausgestaltung der Heizleiteranordnung mit wenigstens zwei in der Abgas-Hauptströmungsrichtung aufeinander folgend angeordneten Heizleitern wenigstens zwei Heizleiter quer zur Abgas-Hauptströmungsrichtung zueinander nicht deckungsgleich sind. Dies bedeutet, dass ein weiter stromabwärts positionierter Heizleiter nicht bzw. nicht vollständig im Strömungsschatten eines weiter stromaufwärts positionierten Heizleiters liegt, sondern zumindest bereichsweise quer zur Abgas-Hauptströmungsrichtung über diesen hervorsteht und somit von diesem nicht überdeckt und gegen die Anströmung mit Abgas abgeschirmt ist. Dabei ist es für eine stabile Positionierung vorteilhaft, wenn die in der Abgas-Hauptströmungsrichtung aufeinander folgenden Heizleiter der Heizleiteranordnung zwischen Trägerelementen der Trägeranordnung getragen sind.

Zur Erhöhung der Stabilität können bei Ausgestaltung der Heizleiteranordnung mit wenigstens zwei in der Abgas-Hauptströmungsrichtung aufeinanderfolgend angeordneten Heizleitern wenigstens zwei Heizleiter durch wenigstens ein, vorzugsweise eine Mehrzahl von Verstrebungselementen bezüglich einander abgestützt sein.

Hierzu kann wenigstens ein, vorzugsweise jedes Verstrebungselement sich zwischen Mäander-Windungsabschnitten zweier Heizleiter erstrecken.

Insbesondere bei Parallelschaltung der durch ein oder mehrere Verstrebungselemente bezüglich einander abgestützten Heizleiter können derartige auch zur Vergrößerung der zur Wärmeübertragung nutzbaren Oberfläche beitragenden Verstrebungselemente aus Metallmaterial aufgebaut sein und mit den Heizleiter durch Materialschluss, beispielsweise Verschweißen oder Verlöten, verbunden sein.

Bei Ausgestaltung der Heizleiter mit einem oder mehreren Mäander-Windungsfeldern kann ein gegenseitiges vollständiges Abdecken gegen die Anströmung mit Abgas dadurch vermieden werden, dass bei wenigstens einem, vorzugsweise jedem Mäander-Windungsfeld, wenigstens ein, vorzugsweise eine Mehrzahl von Mäander-Windungsabschnitten von einem der Heizleiter zu einem in der Abgas-Hauptströmungsrichtung folgenden Mäander-Windungsabschnitt eines anderen der Heizleiter quer zur Abgas-Hauptströmungsrichtung nicht deckungsgleich ist.

Bei Ausgestaltung wenigstens eines Trägerelements mit einen radial außen liegenden Leiterbereich wenigstens eines Heizleiters der Heizleiteranordnung in wenigstens einem Umfangsbereich wenigstens teilweise nicht radial überlappendem Befestigungsbereich kann das wenigstens eine Trägerelement eine Mehrzahl von in Umfangsrichtung mit Abstand zueinander angeordneten und radial außen jeweils einen Befestigungsabschnitt des Befestigungsbereichs bereitstellenden Trägerarmen umfassen.

Um dabei den zwischen zwei derartigen Trägerarmen liegenden Bereich eines radial außen liegenden Leiterbereichs eines Heizleiters gegen die Anströmung mit Abgas nicht bzw. nicht vollständig abzudecken, kann vorgesehen sein, dass zwischen den Befestigungsabschnitten wenigstens zweier in Umfangsrichtung aufeinander folgender Trägerarme, vorzugsweise aller in Umfangsrichtung aufeinander folgender Trägerarme, in Umfangsrichtung keine Verbindung besteht.

Alternativ oder zusätzlich kann in Zuordnung zu den Trägerarmen vorgesehen sein, dass die Befestigungsabschnitte wenigstens zweier in Umfangsrichtung aufeinander folgender Trägerarme, vorzugsweise aller in Umfangsrichtung aufeinander folgender Trägerarme, in Umfangsrichtung durch einen Befestigungsrand miteinander verbunden sind. Ein derartiger Befestigungsrand trägt radial außen zur Versteifung eines Trägerelements bei, ist gleichwohl aber derart dimensioniert, dass in dem Bereich zwischen den beiden durch diesen verbundenen Trägerarmen der radial außen liegende Leiterbereich nicht bzw. nicht vollständig überdeckt ist.

Um einen stabilen Aufbau zu erhalten, wird vorgeschlagen, dass die Trägerarme des wenigstens einen Trägerelements von einem Zentralbereich des wenigstens einen Trägerelements sich nach radial außen erstrecken, oder/und dass wenigstens an einem Teil der Trägerarme des wenigstens einen Trägerelements oder/und einem Zentralbereich des wenigstens einen Trägerelements wenigstens eine Verbindungsformation zum festen Verbinden des wenigstens einen Trägerelements mit der Heizleiteranordnung vorgesehen ist.

Um in Bereichen, in welchen unvermeidbar auch der radial äußere Leiterbereich durch einen Trägerarm überdeckt sein muss, das Entstehen eines Wärmestaus zu vermeiden, wird weiter vorgeschlagen, dass wenigstens Heizleiter in einem von einem Trägerarm überdeckten Bereich eine größere Leiter-Querschnittsfläche aufweist, als in einem nicht von einem Trägerarm überdeckten Bereich. In dem überdeckten Bereich weist aufgrund der größeren Querschnittsfläche der Heizleiter einen geringeren Widerstand auf, so dass dort auch weniger Wärme generiert wird. Eine derartige Struktur ist vorzugsweise in einem radial äußeren Leiterbereich eines Heizleiters, insbesondere einem radial äußeren Mäander-Windungsabschnitt bei zumindest einem Mäander-Windungsfeld vorgesehen.

Eine stabile Struktur kann weiter dadurch unterstützt werden, dass ein stromaufwärtiges Trägerelement und ein stromabwärtiges Trägerelement vorgesehen sind, wobei die Heizleiteranordnung in der Abgas-Hauptströmungsrichtung zwischen dem stromaufwärtigen Trägerelement und dem stromabwärtigen Trägerelement angeordnet ist. Die Heizleiteranordnung ist selbstverständlich bezüglich der beispielsweise auch aus Blechmaterial aufgebauten Trägerelemente elektrisch isoliert gehalten.

Bei einer besonders bevorzugten Ausgestaltung kann vorgesehen sein, dass wenigstens ein Trägerelement wenigstens einen Spannungsquellen-Anschlussbereich der Heizleiteranordnung gegen eine direkte Abgasanströmung im Wesentlichen abschirmt. Im Bereich des Anschlusses der Heizleiteranordnung an ein Abgasführungsgehäuse durchsetzende Anschlusselemente wird im Allgemeinen weniger Wärme bereitgestellt, als in den zur thermischen Wechselwirkung mit dem Abgas vorgesehenen Leiterbereichen der Heizleiteranordnung. Durch das Abschirmen dieses Bereichs gegen die Abgasdurchströmung wird somit vermieden, dass in diesem Bereich strömendes Abgas weniger stark erwärmt wird, als in anderen Bereichen strömendes Abgas.

Die Erfindung betrifft ferner eine Abgasheizanordnung für eine Abgasanlage einer Brennkraftmaschine, umfassend wenigstens einen an einem Abgasführungsgehäuse getragenen erfindungsgemäß aufgebauten Abgasheizer.

Die Erfindung betrifft ferner eine Abgasanlage für eine Brennkraftmaschine, umfassend wenigstens einen in einem Abgasführungsgehäuse angeordneten, erfindungsgemäß aufgebauten Abgasheizer und stromabwärts bezüglich des Abgasheizers wenigstens eine Abgasbehandlungsanordnung.

Die vorliegende Erfindung wird nachfolgend mit Bezug auf die beiliegenden Figuren detailliert beschrieben. Es zeigt:
- Fig. 1: eine Ansicht eines Abgasheizers in einem Abgasführungsgehäuse, betrachtet in einer Abgas-Hauptströmungsrichtung;
- Fig. 2: den Abgasheizer der Fig. 1 in dem Abgasführungsgehäuse in perspektivischer Ansicht;
- Fig. 3: eine Teil-Längsschnittansicht des in das Abgasführungsgehäuse eingesetzten Abgasheizers;
- Fig. 4: ein Trägerelement einer Trägeranordnung des Abgasheizers der Fig. 1;
- Fig. 5: einen weiter stromaufwärts zu positionierenden ersten Heizleiter einer Heizleiteranordnung des Abgasheizers der Fig. 1;
- Fig. 6: einen weiter stromabwärts zu positionierenden zweiten Heizleiter der Heizleiteranordnung des Abgasheizers der Fig. 1;
- Fig. 7: die Heizleiter der Fig. 5 und 6 im Verbund;
- Fig. 8: eine der Fig. 1 entsprechende Ansicht einer alternativen Ausgestaltung eines in einem Abgasführungsgehäuse angeordneten Abgasheizers;
- Fig. 9: eine perspektivische Ansicht des Abgasheizers der Fig. 8 in dem Abgasführungsgehäuse;
- Fig. 10: eine Seitenansicht des Abgasheizers der Fig. 8 in einem Abgasführungsgehäuse;
- Fig. 11: eine Teil-Längsschnittansicht des Abgasheizers der Fig. 8;
- Fig. 12: einen weiter stromaufwärts zu positionierenden ersten Heizleiter einer Heizleiteranordnung des Abgasheizers der Fig. 8;
- Fig. 13: einen weiter stromabwärts zu positionierenden zweiten Heizleiter der Heizleiteranordnung des Abgasheizers der Fig. 8;
- Fig. 14: die Heizleiter der Fig. 12 und 13 im Verbund;
- Fig. 15: ein stromaufwärtiges Trägerelement einer Trägeranordnung des Abgasheizers der Fig. 8;
- Fig. 16: ein stromabwärtiges Trägerelement der Trägeranordnung des Abgasheizers der Fig. 8;
- Fig. 17: eine alternative Ausgestaltung eines stromaufwärtigen Trägerelements;
- Fig. 18: eine alternative Ausgestaltung eines stromabwärtigen Trägerelements;
- Fig. 19: ein Isolierelement für eine Heizleiteranordnung;
- Fig. 20: in prinzipartiger Darstellung eine Abgasanlage
- Fig. 21: zwischen zwei Heizleitern angeordnete Verstrebungselemente.

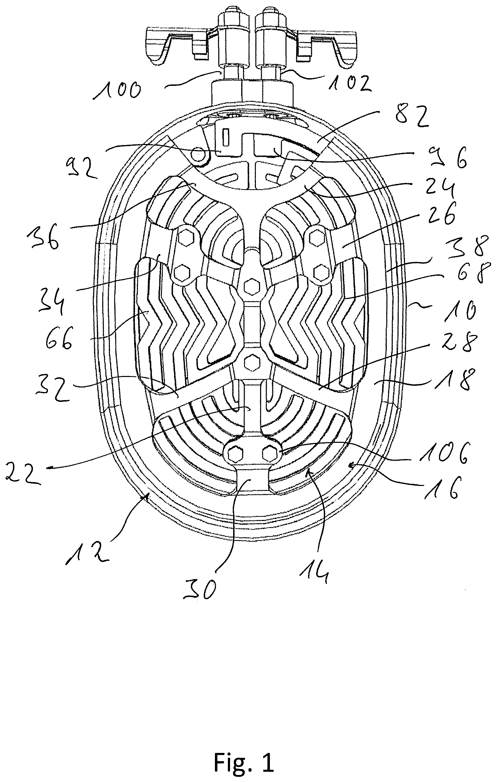

Die Fig. 1 bis 7 zeigen eine erste Ausgestaltungsart eines in ein beispielsweise rohrartiges und zumindest abschnittsweise in Richtung einer Abgasheizer-Mittenachse A langgestrecktes Abgasführungsgehäuse 10 eingesetzten Abgasheizers 12. Der Abgasheizer 12 umfasst eine allgemein mit 14 bezeichnete Heizleiteranordnung, die durch eine Trägeranordnung 16 am Abgasführungsgehäuse 10 getragen ist.

Die Trägeranordnung 16 umfasst zwei scheibenartige und beispielsweise aus Blechmaterial geformte, zueinander baugleiche Trägerelemente 18, 20. Die Trägerelemente 18, 20 sind mit einem im Wesentlichen quer zur Abgasheizer-Mittenachse A sich erstreckenden Zentralbereich 22 und einer Mehrzahl von von dem Zentralbereich 22 sich in Richtung nach radial außen erstreckenden Trägerarmen 24, 26, 28, 30, 32, 34, 36 aufgebaut. In einem Außenumfangsbereich der Trägerelemente 18, 20 ist ein allgemein mit 38 bezeichneter Befestigungsbereich gebildet, mit welchem die Trägerelemente 18, 20 und somit der gesamte Abgasheizer 12 an der Innenoberfläche des Abgasführungsgehäuses 10 beispielsweise durch Verschweißung festgelegt werden kann. In diesem Befestigungsbereich 38 sind die beiden Trägerelemente 18, 20 in axialer Richtung abgekrümmt.

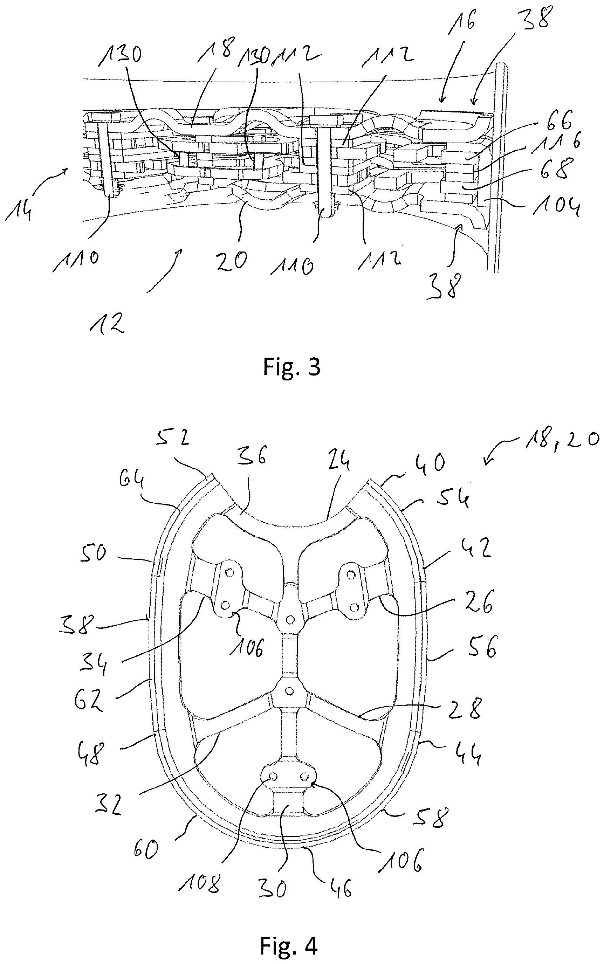

Im Bereich von jedem der Trägerarme 24, 26, 28, 30, 32, 34, 36 umfasst der Befestigungsbereich 38 einen jeweiligen Befestigungsabschnitt 40, 42, 44, 46, 48, 50, 52. Zwischen zwei jeweils einen radial äußeren Endbereich eines Trägerarms 24, 26, 28, 30, 32, 34, 36 bildenden Befestigungsabschnitten 40, 42, 44, 46, 48, 50, 52 ist jeweils ein die Befestigungsabschnitte zweier benachbarter Trägerarme verbindender Befestigungsrand 54, 56, 58, 60, 62, 64 gebildet, so dass die Befestigungsabschnitte 40, 42, 44, 46, 48, 50, 52 mit den dazwischen sich erstreckenden und benachbarte Trägerarme 24, 26, 28, 30, 32, 34, 36 miteinander verbindenden Befestigungsrändern 54, 56, 58, 60, 62, 64 eine in Umfangsrichtung im Wesentlichen durchlaufende Struktur des Befestigungsbereichs 38 bereitstellen. Lediglich zwischen den beiden in Fig. 4 oben erkennbaren Trägerarmen 24, 36 bzw. deren Befestigungsabschnitten 40, 52 erstreckt sich kein Befestigungsrand.

Durch die Gestalt der Trägerarme 24, 26, 28, 30, 32, 34, 36 und auch des Befestigungsbereichs 38 wird eine gezielte Strömungsführung für das den Abgasheizer 12 durchströmende Abgas erreicht. Insbesondere können durch die Trägerarme 24, 26, 28, 30, 32, 34, 36 Bereiche abgedeckt werden, die gegen eine direkte Anströmung geschützt werden sollen. Dies können beispielsweise Bereiche sein, in welchen Sensoren beispielsweise zur Temperaturerfassung oder zur Erfassung der Abgaszusammensetzung angeordnet sind. Durch den im Wesentlichen ringartig durchlaufenden Befestigungsbereich 38 wird eine Strömung im radial äußeren Bereich unmittelbar entlang einer vergleichsweise kalten Innenoberfläche eines den Abgasheizer 12 enthaltenden Abgasführungsgehäuses verhindert.

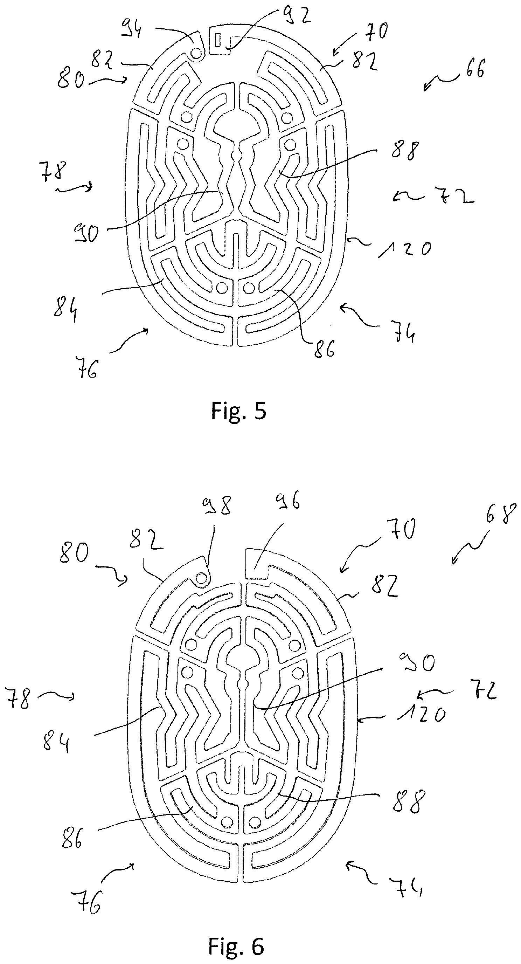

Die Fig. 5 und 6 zeigen einen stromaufwärtigen ersten Heizleiter 66 sowie einen stromabwärtigen zweiten Heizleiter 68 der Heizleiteranordnung 14. Jeder der beiden grundsätzlich nicht mit elektrisch isolierendem Material ummantelten Heizleiter 66, 68 ist durch Heraustrennen, beispielsweise Ausstanzen oder Ausschneiden, wie zum Beispiel Laserschneiden oder Wasserstrahlschneiden, aus einem Metall-Flachmaterial bereitgestellt und weist eine Außenumfangskontur auf, welche an die Innenumfangskontur des Abgasführungsgehäuses 10 angepasst ist und im dargestellten Ausgestaltungsbeispiel abgeflacht rund ist. Jeder der beiden Heizleiter 66, 68 ist mit einer Mehrzahl von in Umfangsrichtung aufeinander folgenden Mäander-Windungsfeldern 70, 72, 74, 76, 78, 80 aufgebaut, wobei in jedem der Mäander-Windungsfelder 70, 72, 74, 76, 78, 80 zueinander im Wesentlichen radial gestaffelte Mäander-Windungsabschnitte 82, 84, 86, 88, 90 vorgesehen sind, welche näherungsweise in Umfangsrichtung sich erstreckend ausgebildet sind. In einem ihrer Umfangsendbereiche sind die Mäander-Windungsabschnitte 84, 86, 88, 90 jeweils mit einem weiter radial außen positionierten Mäander-Windungsabschnitt 82, 84, 86, 88 verbunden. In ihrem anderen Umfangsendbereich sind die Mäander-Windungsabschnitte 82, 84, 86, 88 jeweils mit einem weiter radial innen liegenden Mäander-Windungsabschnitt 84, 86, 88, 90 verbunden. Die jeweiligen radial äußeren Mäander-Windungsabschnitte 82 der Mäander-Windungsfelder 72, 74, 76, 78 verbinden einander unmittelbar benachbarte Mäander-Windungsfelder miteinander. Gleichermaßen verbinden die radial inneren Mäander-Windungsabschnitte 90 der Mäander-Windungsfelder 70, 72, 74, 76, 78, 80 einander unmittelbar benachbarte Mäander-Windungsfelder, so dass insgesamt eine serielle elektrische Schaltung der Mäander-Windungsfelder 70, 72, 74, 76, 78, 80 erhalten wird.

Obgleich das Erzeugen derartiger Heizleiter 66, 68 durch Heraustrennen aus einem Flachmaterial in besonders einfacher und ökonomisch durchführbarer Art und Weise die Möglichkeit gibt, die Heizleiter 66, 68 mit vergleichsweise komplexer Struktur der Mäander-Windungsabschnitte derselben bereitzustellen, sind grundsätzlich auch andere Herstellungsverfahren, wie zum Beispiel Metallspritzguss oder Sintern, zum Erhalt derartiger Heizleiter 66,68 möglich.

Die radial äußeren Mäander-Windungsabschnitte 82 der Mäander-Windungsfelder 70, 80 des ersten Heizleiters 66 stellen einen ersten Anschlussbereich 92 bzw. einen zweiten Anschlussbereich 94 des ersten Heizleiters 66 bereit. Gleichermaßen stellen die radial äußeren Mäander-Windungsabschnitte 82 der Mäander-Windungsfelder 70, 80 des zweiten Heizleiters 68 einen ersten Anschlussbereich 96 und einen zweiten Anschlussbereich 98 des zweiten Heizleiters 68 bereit. Mit ihren ersten Anschlussbereichen 92, 94 stellen die Heizleiter 66, 68 jeweils einen Spannungsquellen-Anschlussbereich bereit, mit welchem die Heizleiter beispielsweise über das Abgasführungsgehäuse 10 elektrisch isoliert und gasdicht durchsetzende Anschlusselemente 100, 102 an eine Spannungsquelle angeschlossen werden können. Mit ihren zweiten Anschlussbereichen 94, 98 stellen die beiden Heizleiter 66, 68 Verbindungs-Anschlussbereiche bereit, in welchen die beiden Heizleiter 66, 68 beispielsweise durch einen Nietbolzen oder Verschweißen oder dergleichen, miteinander elektrisch leitend verbunden sind, so dass sich in diesem Ausgestaltungsbeispiel eine elektrisch serielle Schaltung der beiden Heizleiter ergibt. Im Bereich der Anschlussbereiche 92, 94, 96, 98 weisen die Heizleiter 66, 68 bzw. die jeweiligen radial außen liegenden Mäander-Windungsabschnitte 82 eine vergleichsweise große Breite auf, um aufgrund des lokal geringeren elektrischen Widerstands in diesen gegen die Anströmung mit Abgas abgeschirmten Bereichen das Entstehen von Wärme im Vergleich zu den frei anströmbaren Bereichen mindern.

Bei einer alternativen Ausgestaltung können bei jedem der Heizleiter 66, 68 auch die zweiten Anschlussbereiche 94, 98 Spannungsquellen-Anschlussbereiche bereitstellen, so dass beispielsweise die beiden ersten Anschlussbereiche 92, 96 der beiden Heizleiter 66, 68 mit dem Anschlusselement 100 und über dieses mit einer Spannungsquelle verbunden werden können, während die zweiten Anschlussbereiche 94, 98 der beiden Heizleiter 66, 68 miteinander und über das Anschlusselement 102 mit der Spannungsquelle verbunden sein können, so dass sich eine elektrisch parallele Schaltung der Heizleiter 66, 68 ergibt. Insbesondere bei Auswahl einer Parallelschaltung der beiden Heizleiter 66, 68 wird eine Selbstregulierung der Heizleiter 66, 68 erhalten, wenn diese unterschiedlichen Abgastemperaturen ausgesetzt sind und dadurch lokal unterschiedliche elektrische Widerstände der Heizleiter 66, 68 auftreten.

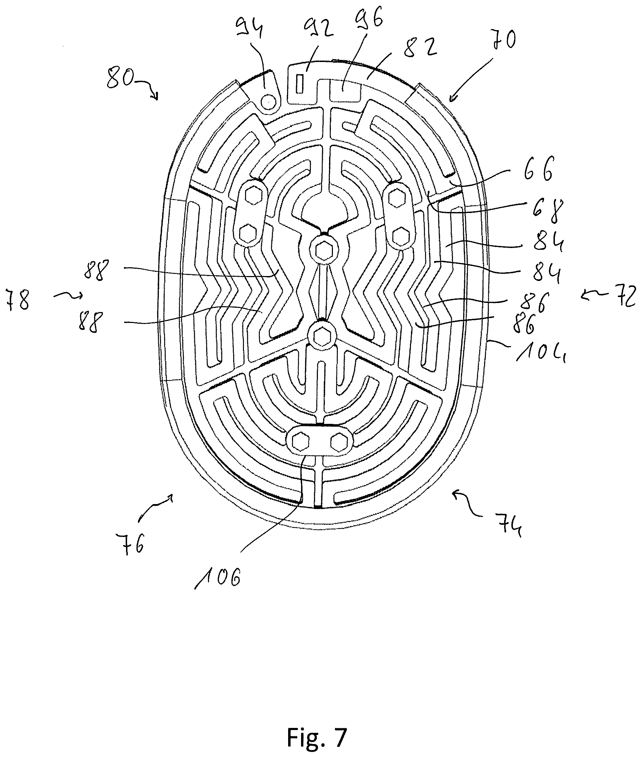

Durch die in Richtung der Abgasheizer-Mittenachse A und somit auch einer Abgas-Hauptströmungsrichtung H hintereinander liegenden Heizleiter 66, 68 wird bei axial kompakter Baugröße eine vergleichsweise große Oberfläche zur thermischen Wechselwirkung mit dem zu erwärmenden Abgas erreicht. Um dabei dafür zu sorgen, dass der weiter stromabwärts positionierte zweite Heizleiter 68 nicht vollständig im Strömungsschatten des weiter stromaufwärts positionierten ersten Heizleiters 66 positioniert ist, weisen die beiden Heizleiter 66, 68 zueinander nicht identische Strukturen bzw. Verläufe der einzelnen Mäander-Windungsabschnitte 82, 84, 86, 88 auf. Dies zeigt der in Fig. 7 dargestellte Verbund, bei welchem erkennbar ist, dass in den einzelnen Mäander-Windungsfeldern 70, 72, 74, 76, 78, 80 insbesondere die Mäander-Windungsabschnitte 84, 86, 88 der beiden Heizleiter 66, 68 nicht vollständig deckungsgleich zueinander liegen, sondern radial zueinander versetzt sind, so dass der weiter stromabwärts positionierte zweite Heizleiter 68 zumindest bereichsweise quer zur Abgas-Hauptströmungsrichtung H über den weiter stromaufwärts positionierten ersten Heizleiter 66 hervorsteht. Wie der Fig. 7 zu entnehmen ist, besteht somit nahezu kein Querschnittsbereich, der nicht durch einen der beiden Heizleiter 66, 68 abgedeckt ist, so dass auch unter Berücksichtigung der beim Durchströmen der beiden Heizleiter 66, 68 auftretenden Verwirbelungen bzw. Turbulenzen eine sehr effiziente und gleichmäßige Erwärmung des Abgasstroms erreicht wird.

Weiter kann die Anordnung so sein, dass die radial äußeren Mäander-Windungsabschnitte 82, welche vom Befestigungsbereich 38 radial im Wesentlichen vollständig umgriffen sind und zum Bereitstellen einer elektrischen Isolierung bezüglich der Befestigungsbereiche 38 der beiden Trägerelemente 18, 20 von U-förmigem Isoliermaterial 104 umgeben sind, zueinander im Wesentlichen deckungsgleich sind. Auch die radial inneren Mäander-Windungsabschnitte 90 der beiden Heizleiter 66, 68 können zueinander deckungsgleich liegen.

Zum Herstellen eines festen Verbundes der beiden Trägerelemente 18, 20 mit den beiden zwischen diesen positionierten Heizleitern 66, 68 sind im Bereich von einigen der Trägerarme, nämlich im Bereich der Trägerarme 26, 30, 34, Verbindungsformationen 106 jeweils mit einer oder zwei Verbindungsöffnungen 108 vorgesehen. Durch diese Verbindungsöffnungen 108 können auch entsprechende Öffnungen in den Heizleitern 66, 68 durchsetzende Verbindungselemente 110, beispielsweise Schraubbolzen oder Nietbolzen, hindurch geführt werden, um somit einen festen axialen Verbund zu erreichen. Auch im Zentralbereich 22 können derartige Verbindungsformationen 106 vorgesehen sein. Es ist darauf hinzuweisen, dass in dem in Fig. 7 dargestellten Verbund die an den Trägerarmen 26, 28 und 34 sowie auch die am Zentralbereich 22 vorgesehenen Verbindungsformationen 106 beispielhaft dargestellt sind.

Grundsätzlich können die Heizleiter 66, 68 in denjenigen Bereichen, in welchen sie durch die Trägerelemente 18, 20 überdeckt und somit gegen die Abgasanströmung abgeschirmt sind, eine größere Breite bzw. Querschnittsfläche aufweisen, als in den gegen Abgasanströmung im Wesentlichen nicht abgeschirmten Bereichen, um aufgrund des lokal geringeren elektrischen Widerstandes in diesen Bereichen weniger Wärme zu erzeugen, als in nicht abgeschirmten Bereichen. In den im Wesentlichen nicht abgeschirmten Bereichen kann beispielsweise eine Querschnittsabmessung der Mäander-Windungsabschnitte im Bereich von 2mm x 4mm bis 4mm x 2mm bereitgestellt sein.

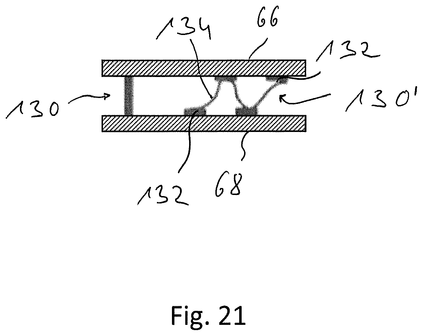

Zur weiteren Erhöhung der Stabilität können zwischen den Heizleitern 66, 68 bzw. verschiedenen der Mäander-Windungsabschnitte derselben in Fig. 21 beispielhaft dargestellte Verstrebungselemente 130 angeordnet sein. Diese können einen Verbund zwischen in Strömungsrichtung hintereinander liegenden Mäander-Windungsabschnitten der Heizleiter 66, 68 herstellen, so dass insbesondere bei vergleichsweise dünner Ausgestaltung der Mäander-Windungsabschnitte diese aneinander abgestützt sind und somit auch gegen Schwingungsanregung gehalten sind. Bei Parallelschaltung der beiden Heizleiter können die Verstrebungselemente 130 vergleichsweise einfach herzustellende Metallelemente sein, welche mit den Heizleitern 66, 68 beispielsweise durch Materialschluss, wie zum Beispiel Verlöten oder Verschweißen, fest verbunden sein können. Aufgrund der parallelen Schaltung der Heizleiter 66, 68 beeinflussen derartige lokale Leitungsbrücken insbesondere dann, wenn die beiden Heizleiter näherungsweise eine gleiche Gestalt aufweisen, das Leitungsverhalten und somit auch das Heizverhalten der Heizleiter 66, 68 im Wesentlichen nicht. Alternativ können derartige Verstrebungselemente 130 aus nicht leitenden Materialien, wie zum Beispiel Keramikmaterial oder hitzebeständigem Kunststoffmaterial, aufgebaut sein und mit den Heizleitern 66, 68 beispielsweise durch Verklebung oder Verrastung oder dergleichen verbunden werden. Eine derartige Ausgestaltung bietet sich insbesondere dann an, wenn die Heizleiter 66, 68 zueinander seriell geschaltet sind.

Da durch derartige Verstrebungselemente 130 ein stabiler Verbund der beiden Heizleiter 66, 68 erreicht werden kann, besteht die Möglichkeit, die Trägerelemente 18, 20 beispielsweise mit einer geringeren Anzahl an Trägerarmen bzw. einer geringeren Anzahl an Befestigungsbereichen auszugestalten, in welchen beispielsweise durch die in Figur 3 erkennbaren Verbindungselemente 110 die beiden Heizleiter 66, 68 an den Trägerelementen 18, 20 festgelegt sind. Dadurch wird auch ein größerer Oberflächenbereich der Heizleiter 66, 68 zur Umströmung mit Abgas freigegeben. Ein weiterer durch das Einbringen derartiger Verstrebungselemente generierter Effekt ist die Vergrößerung der von Abgas umströmbaren und somit zur Wärmeübertragung nutzbaren Oberfläche des Abgasheizers 12.

Die Fig. 21 zeigt zwei verschiedene Ausgestaltungen derartiger Verstrebungselemente 130 bzw. 130'. Das in Fig. 21 links erkennbare Verstrebungselement 130 ist balkenartig aufgebaut und erstreckt sich näherungsweise orthogonal zu den durch dieses verbundenen Mäander-Windungsabschnitten der Heizleiter 66, 68. Das in Fig. 21 rechts dargestellte Verstrebungselement 130' weist mehrere an den Heizleitern 66, 68 festgelegte Befestigungsfüße 132 auf, zwischen welchen sich gekrümmte Verbindungsabschnitte 134 erstrecken. Aufgrund des Versatzes der durch einen jeweiligen Verbindungsabschnitt 134 miteinander verbundenen Befestigungsfüße 132 und aufgrund der gekrümmten Struktur der Verbindungsabschnitte 134 wird eine starre Kopplung vermieden und eine Elastizität eingebracht, welche zusätzlich zur Schwingungsdämpfung beitragen kann bzw. eine geringfügige Bewegung der Heizleiter 66, 68 bezüglich einander auch in den verkoppelten Bereichen zulässt.

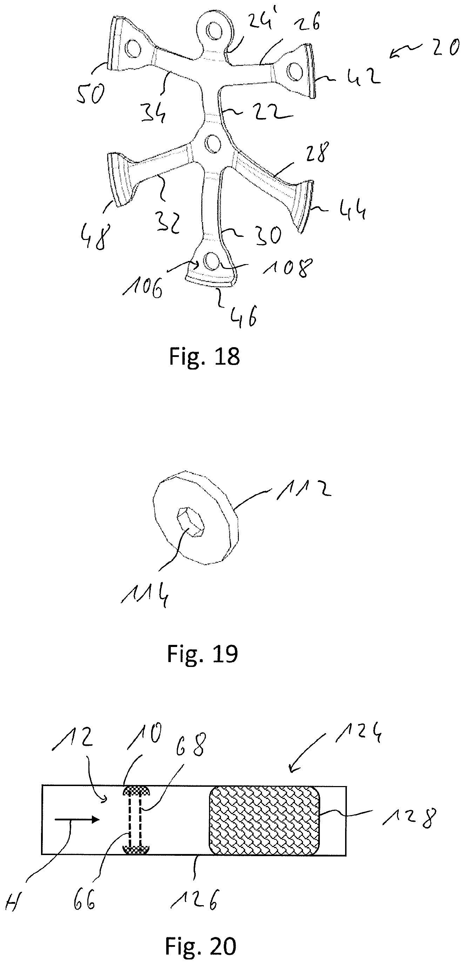

Um im Bereich der Verbindung der beiden Trägerelemente 18, 20 miteinander und mit den beiden Heizleitern 66, 68 einen elektrischen Kurzschluss zu vermeiden, sind zwischen jedem der beiden Heizleiter 66, 68 und dem diesem unmittelbar benachbarten Trägerelement 18 bzw. 20 und zwischen den beiden Heizleitern 66, 68 beispielsweise scheibenartige Isolierelemente 112 vorgesehen. Ein derartiges Isolierelement 112 ist in Fig. 19 dargestellt und weist eine zentrale Öffnung 114 auf, durch welche ein jeweiliges Verbindungselement 110 hindurchgeführt sein kann. Auch im radial äußeren Bereich, dort wo die beiden Heizleiter 66, 68 zum Bereitstellen einer elektrischen Isolierung bezüglich der Randbereiche 38 der Trägerelemente 18, 20 von einer insgesamt U-förmigen Struktur des Isoliermaterials 104 umgriffen sind, kann zwischen den beiden Heizleitern 66, 68, insbesondere den radial äußeren Mäander-Windungsabschnitten 82 derselben, Isoliermaterial 116, beispielsweise mit einer insgesamt ringartigen Struktur angeordnet sein.

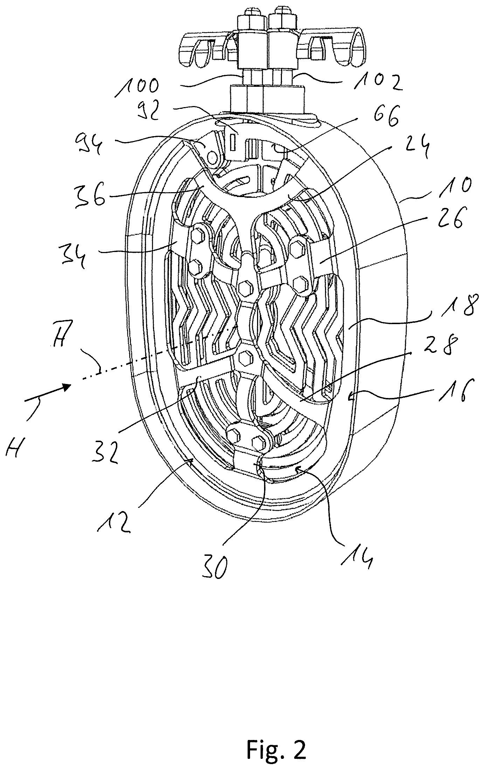

In Fig. 2 ist zu erkennen, dass dadurch, dass zwischen den beiden Trägerarmen 24, 36 der Trägerelemente 18, 20 kein Befestigungsrand gebildet ist, derjenige Bereich, in welchem die beiden Heizleiter 66, 68 an die Anschlusselemente 100, 102 beispielsweise durch Verschweißung oder Verlötung oder durch Formschluss angebunden sind, frei liegt. Somit besteht beim Einsetzen eines Abgasheizers 12 in das Abgasführungsgehäuse 10 die Möglichkeit, Zugriff auf die ersten Anschlussbereiche 92, 96 zu erhalten, um diese an den in das Innere des Abgasführungsgehäuses 10 eingreifenden Abschnitten der Verbindungselemente 100, 102 elektrisch leitend festlegen zu können. Da dieser Zugriff von beiden axialen Seiten, also bei beiden Trägerelementen 18, 20 besteht, kann jeder erste Anschlussbereich 92, 96 zuverlässig an das jeweils zugehörige Verbindungselement 100 bzw. 102 angeschlossen werden.

Mit dem in den Fig. 1 bis 7 dargestellten Aufbau eines Abgasheizers 12 wird bei axial kompakter Ausgestaltung eine vergleichsweise große Wechselwirkungsfläche zur Erwärmung des den Abgasheizer 12 durchströmenden Abgases erreicht. Im radial äußeren Bereich der beiden Heizleiter 66, 68, also insbesondere den radial äußeren Mäander-Windungsabschnitten 82 der einzelnen Mäander-Windungsfelder 70, 72, 74, 76, 78, 80 sind die beiden Heizleiter 66, 68 von den Befestigungsrändern 38 der Trägerelemente 18, 20 radial und in Umfangsrichtung im Wesentlichen vollständig übergriffen. Um dort das Entstehen eines Wärmestaus zu vermeiden, sind, wie in den Fig. 5 und 6 deutlich sichtbar, diese radial äußeren Mäander-Windungsabschnitte 82 mit größerer radialer Breite und somit größerer Querschnittsfläche und dementsprechend auch geringerem elektrischen Winderstand aufgebaut, als die weiter radial innen liegenden und von Abgas umströmbaren Mäander-Windungsabschnitte 84, 86, 88, 90. Aufgrund des geringeren elektrischen Widerstandes wird in den radial äußeren Mäander-Windungsabschnitten 82, welche in Umfangsrichtung eine im Wesentlichen konstante radiale Breite aufweisen, weniger Wärme entstehen, so dass auch das im Wesentlichen vollständige Umgreifen bzw. Überdecken dieser radial äußeren Mäander-Windungsabschnitte 82 durch das Isoliermaterial 104 bzw. die Befestigungsränder 38 der Trägerelemente 18, 20 nicht zum Entstehen eines Wärmestaus führt.

Die in der Abgas-Hauptströmungsrichtung H aufeinanderfolgend angeordneten Heizleiter 66, 68 können zur Verbesserung der thermischen Wechselwirkung mit dem Abgas bzw. auch zur Beeinflussung der Abgasströmung zueinander unterschiedlich gestaltet bzw. dimensioniert sein und aus verschiedenen Materialien aufgebaut sein.

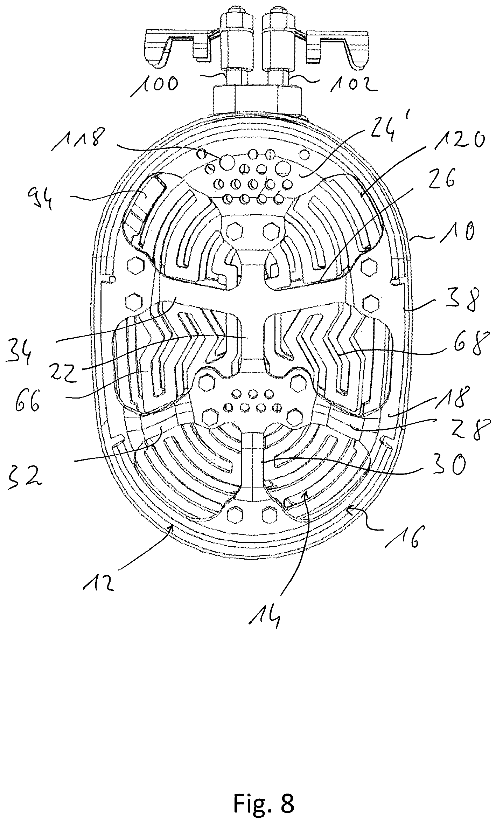

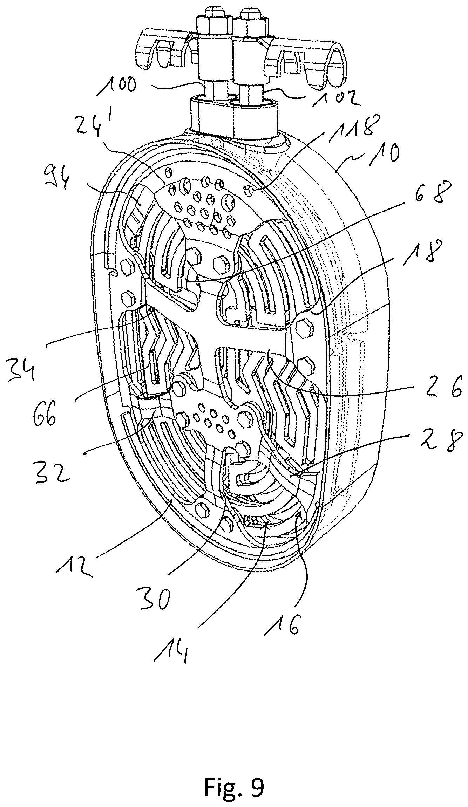

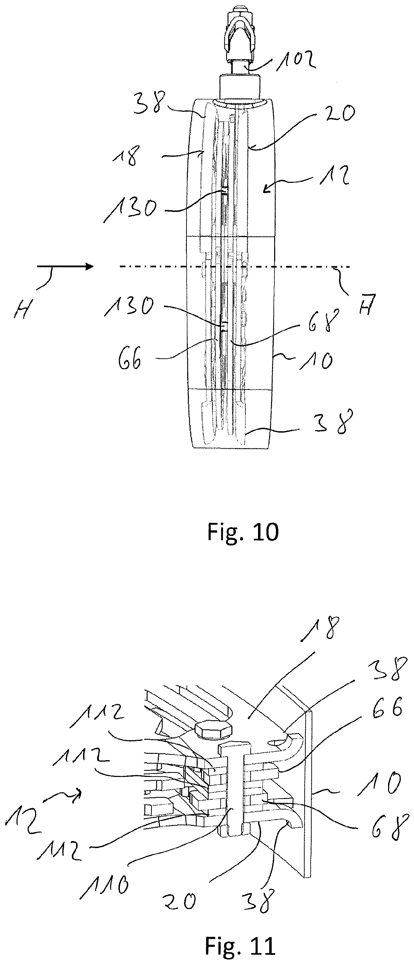

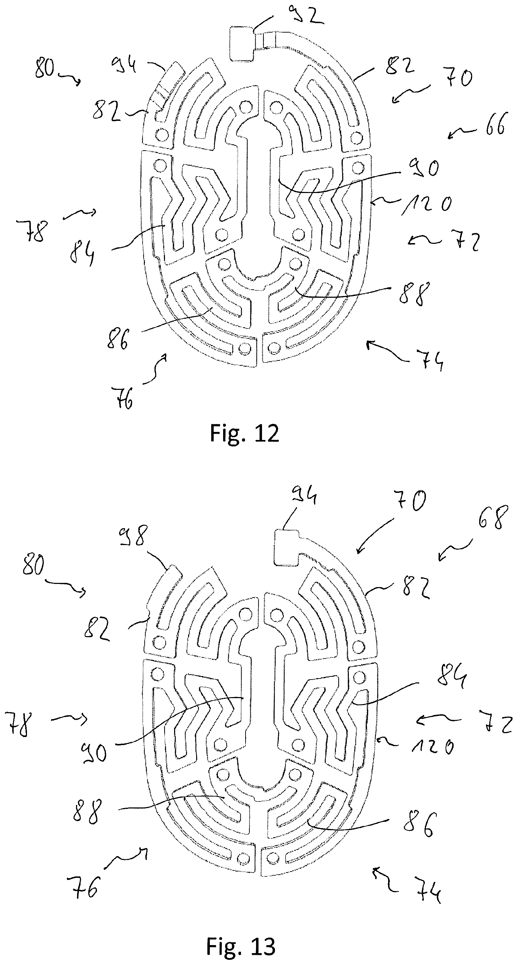

Eine abgewandelte Ausgestaltungsform eines Abgasheizers wird nachfolgend mit Bezug auf die Fig. 8 bis 18 beschrieben. Komponenten bzw. Baugruppen, welche vorangehend beschriebenen Komponenten bzw. Baugruppen hinsichtlich des Aufbaus und der Funktion entsprechen, sind mit den gleichen Bezugszeichen bezeichnet.

Es ist darauf hinzuweisen, dass hinsichtlich des grundsätzlichen Aufbaus der Abgasheizer der Fig. 8 bis 18 bzw. eine damit aufgebaute Abgasanlage dem vorangehend mit Bezug auf die Fig. 1 bis 7 beschriebenen Aufbau entsprechen. Hinsichtlich des grundsätzlichen Aufbaus der in den Fig. 8 bis 18 dargestellten Ausgestaltungsform eines Abgasheizers wird daher auf die vorangehenden Ausführungen verwiesen. Im Folgenden wird im Wesentlichen auf die zu der vorangehend beschriebenen Ausgestaltungsform bestehenden Unterschiede eingegangen.

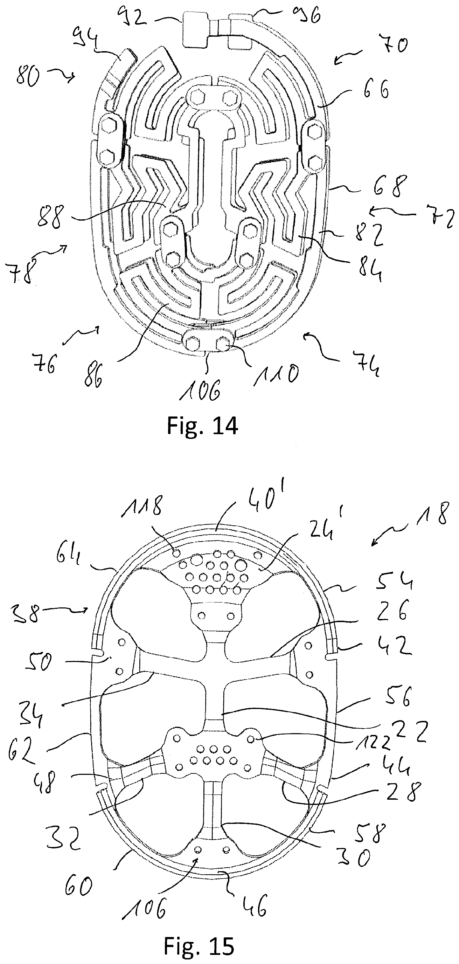

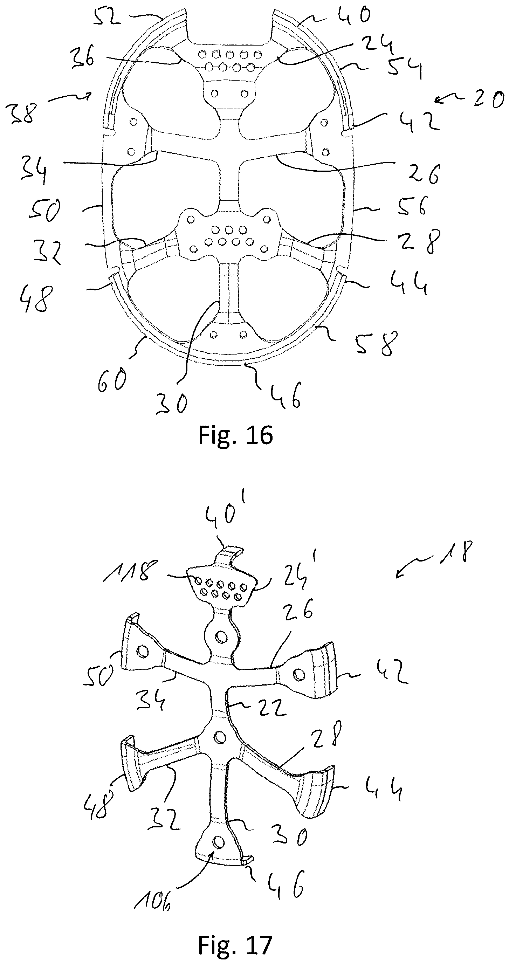

Der Abgasheizer 12 der Fig. 8 bis 18 unterscheidet sich von dem vorangehend beschriebenen Abgasheizer im Wesentlichen durch die Ausgestaltung der beiden Trägerelemente 18, 20 der Trägeranordnung 16. Das stromaufwärtige Trägerelement 18 dieses Abgasheizers 12 ist in Fig. 15 dargestellt. Das stromabwärtige Trägerelement 20 dieses Abgasheizers 12 ist in Fig. 16 dargestellt. Deutlich zu sehen ist im Vergleich der Fig. 15 und 16, dass bei dieser Ausgestaltungsform eines Abgasheizers 12 die beiden Trägerelemente 18, 20 zueinander unterschiedlich ausgestaltet sind. Insbesondere ist das stromaufwärtige Trägerelement 15 so beschaffen, dass es denjenigen Bereich, in welchem die beiden Heizleiter 66, 68 dieses Abgasheizers 12 mit den Anschlusselementen 100, 102 verbunden sind, an der stromaufwärtigen Seite des Abgasheizers 12 gegen eine direkte Anströmung mit Abgas im Wesentlichen abschirmt, während bei dem stromabwärtigen Trägerelement 20 zwischen den vom Zentralbereich 22 ausgehenden Trägerarmen 24, 36 radial außen nach wie vor eine Aussparung belassen ist, also der Befestigungsbereich 38 unterbrochen ist und zwischen den Befestigungsabschnitten 40, 52 kein Befestigungsrand vorgesehen ist. Auf diese Art und Weise wird von der stromabwärtigen Seite her nach wie vor Zugang zu demjenigen Bereich erhalten, in welchem die beiden Heizleiter 66, 68 mit den Anschlusselementen 100, 102 zu verbinden sind.

Bei dem stromaufwärtigen Trägerelement 18 ist in dem die Verbindung der Heizleiter 66, 68 mit den Anschlusselementen 100, 102 überdeckenden Bereich ein die beiden Trägerarme 24, 36 des stromabwärtigen Trägerelements 20 zusammenfassender, einheitlicher Trägerarm 24' vorgesehen, welcher mit einem über einen größeren Umfangsbereich sich erstreckenden Befestigungsabschnitt 40' auch einen in diesem Bereich in Umfangsrichtung durchlaufenden Befestigungsbereich 38 bereitstellt. Um eine vollständige Verdämmung in diesem Bereich zu vermeiden, sind in dem Trägerarm 24' mehrere beispielsweise auch verschieden dimensionierte Durchtrittsöffnungen 118 vorgesehen.

Grund für diese Ausgestaltung des stromaufwärtigen Trägerelements 18 ist, dass, wie die Fig. 14 dies zeigt, in diesem Bereich die beiden Heizleiter 66, 68 außer den an ihren Umfangsenden jeweils einen ersten Anschlussbereich 92 bzw. 96 bereitstellenden Mäander-Windungsabschnitten 82 keine Mäander-Windungsabschnitte der Mäander-Windungsfelder 70, 80 aufweisen. Durch das Überdecken dieses Bereichs mit dem Trägerarm 24' wird verhindert, dass ein größerer Anteil des auf den Abgasheizer 12 zu strömenden Abgases durch diesen Öffnungsbereich hindurchtritt, ohne in thermische Wechselwirkung mit einem der beiden Heizleiter 66, 68 zu treten. Es wird daher stromabwärts des Abgasheizers 12 eine über den Umfang verteilte gleichmäßigere Temperatur des am Abgasheizer 12 erwärmten Abgases erreicht.

Die Fig. 15 und 16 zeigen insbesondere im Vergleich zu Fig. 4, dass bei den Trägerelementen 18, 20 des Abgasheizers 12 der zweiten Ausgestaltungsform die zwischen den Befestigungsabschnitten 40`, 42, 44, 46, 48, 50 der Trägerarme 24', 26, 28, 30, 32, 34 sich erstreckenden Befestigungsränder 54, 56, 58, 60, 62, 64 eine deutlich geringere radiale Breite aufweisen, sich also weniger weit nach radial innen erstrecken. Dies führt dazu, dass im Bereich zwischen den Trägerarmen 24`, 26, 28, 30, 32, 34 die Trägerelemente 18, 20 die zwischen diesen aufgenommenen Heizleiter 66, 68 in ihren jeweiligen radial äußeren Mäander-Windungsabschnitten 82 nicht nach radial innen übergreifen und somit radial im Wesentlichen nicht abdecken. In Fig. 8 ist deutlich zu erkennen, dass in den Umfangsbereichen zwischen den Befestigungsabschnitten 40', 42, 44, 46, 48, 50 bei den Heizleitern 66, 68 jeweils die einen radial äußeren Leiterbereich 120 bereitstellenden radial äußeren Mäander-Windungsabschnitte 82 gegen die Anströmung mit Abgas nicht abgeschirmt sind. Dies vergrößert den mit Abgas umströmbaren Bereich der Heizleiter 66, 68 und führt somit zu einer effizienteren thermischen Wechselwirkung mit dem den Abgasheizer 12 durchströmenden Abgas.

Um auch im radial äußeren Bereich der Heizleiter 66, 68 eine näherungsweise gleiche Heizcharakteristik zu erreichen, wie in weiter radial innen liegen Bereichen, weisen die radial äußeren Mäander-Windungsabschnitte 82 in den Bereichen, in welchen sie nicht von den Trägerarmen 24`, 26, 28, 30, 32, 34 überdeckt sind, eine geringere Breite und somit auch eine geringere Querschnittsfläche auf, als in denjenigen Bereichen, die von den Trägerarmen 24', 26, 28, 30, 32, 34 überdeckt sind. Insbesondere weisen in diesen nicht überdeckten Bereichen die radial äußeren Mäander-Windungsabschnitte 82 beispielsweise die gleiche Breite und damit die gleiche Querschnittsfläche auf, wie die weiter radial innen liegenden Mäander-Windungsabschnitte 84, 86, 88, 90 insbesondere in den gleichermaßen nicht von den Trägerarmen 24`, 26, 28, 30, 32, 34 bzw. vom Zentralbereich 22 überdeckten Bereichen derselben. Aufgrund der geringeren Querschnittsfläche und des somit erhöhten elektrischen Widerstandes wird auch in diesen Bereichen der radial äußeren Mäander-Windungsabschnitte 82 mehr Wärme entstehen, als in den mit größerem Querschnitt ausgebildeten und von den Trägerarmen 24`, 26, 28, 30, 32, 34 überdeckten Bereichen derselben, so dass in diesen überdeckten Bereichen aufgrund des geringeren Wärmeanfalls ein Wärmestau vermieden wird. Beispielsweise kann die Querschnittsfläche der Mäander-Windungsabschnitte in den von den Trägerelementen 18, 20 nicht bzw. im Wesentlichen nicht überdeckten Bereichen ebenso wie bei der Ausgestaltungsform der Fig. 1 -7 im Bereich von etwa 2mm x 4mm bis etwa 4mm x 2mm liegen.

Da die jeweils radial äußere Leiterbereiche 120 bereitstellenden radial äußeren Mäander-Windungsabschnitte 82 der Heizleiter 66, 68 in den zwischen den Befestigungsabschnitten 40', 42, 44, 46, 48, 50 liegenden Bereichen nicht von den Trägerelementen 18, 20 überdeckt sind, ist bei dieser Ausgestaltung des Abgasheizers 12 radial außen kein die Heizleiter 66, 68 umgreifendes, beispielsweise U-förmiges Isoliermaterial vorhanden. Vielmehr liegen in diesem Bereich die Heizleiter 66, 68 im Wesentlichen frei zwischen den beiden Trägerelementen 18, 20. Eine elektrische Isolierung und eine definierte Positionierung der Heizleiter 66, 68 ist im Wesentlichen nur im Bereich der Verbindungselemente 110 durch die in Fig. 19 dargestellten Isolierelemente 112 realisiert.

Die Fig. 15 und 16 zeigen weiter, dass auch der Zentralbereich 22 insbesondere im Übergang zu den beiden Trägerarmen 28, 32 massiver gestaltet ist, um auch in diesem Bereich in Anpassung an die Formgebung der Heizleiter 66, 68 den Hindurchtritt von Abgas dort, wo keine Mäander-Windungsabschnitte verlaufen, zu verhindern. Auch hier sind jedoch zum Vermeiden eines vollständigen Strömungsstaus Durchtrittsöffnungen 122 in den Trägerelementen 18, 20 gebildet.

Eine abgewandelte Ausgestaltungsform dieser Trägerelemente 18, 20 ist in den Fig. 17, 18 dargestellt. Bei diesen Trägerelementen 18, 20 sind die Trägerarme 24, 26, 28, 30, 32, 34 in ihren radial äußeren Endbereichen, also an den jeweiligen Befestigungsabschnitten 40`, 42, 44, 46, 48, 50 nicht miteinander verbunden. Es existieren also keine zwischen den Befestigungsabschnitten 40`, 42, 44, 46, 48, 50 sich erstreckenden Befestigungsränder. Dies hat zur Folge, dass ein noch größerer Bereich der radial äußeren Leiterbereiche 120 bzw. der radial äußeren Mäander-Windungsabschnitte 82 der beiden Heizleiter 66, 68 nicht durch die Trägerelemente 18, 20 überdeckt ist.

Bei Ausgestaltung des Abgasheizers 12 mit Trägerelemente 18, 20 mit dem vorangehend mit Bezug auf die zweite Ausgestaltungsform beschriebenen Aufbau mit die Heizleiter 66, 68 in Umfangsbereichen radial außen nicht überdeckendem Befestigungsbereich 38 kann der Abgasheizer 12 mit einer anderen Anzahl an Heizleitern, beispielsweise nur einem einzigen Heizleiter oder mehr als zwei Heizleitern, aufgebaut sein.

Weiter ist darauf hinzuweisen, dass, unabhängig von der Ausgestaltung des Befestigungsbereichs 38 entweder als im Wesentlichen in Umfangsrichtung durchlaufende Struktur mit Befestigungsabschnitten im Bereich der Trägerarme und Befestigungsrändern zwischen zumindest einem Teil dieser Befestigungsabschnitte, oder als in Umfangsrichtung unterbrochene Struktur mit diskreten Befestigungsabschnitten, zur Festlegung des Befestigungsbereichs 38 am Abgasführungsgehäuse 10 nicht notwendigerweise der gesamte Befestigungsbereich 38 genutzt werden muss. Es können diskrete Schweißpunkte gesetzt werden, so dass beispielsweise im Bereich einzelner Befestigungsabschnitte oder/und Befestigungsränder keine Anbindung an die Innenseite des Abgasführung Gehäuses erzeugt wird.

Die Fig. 20 zeigt in prinzipartiger Darstellung den Aufbau einer Abgasanlage 124, bei welcher in einem rohrartigen, abgasführenden Gehäuse 126, welches auch das Abgasführungsgehäuse 10 für den Abgasheizer 12 bereitstellen oder umfassen kann, eine Abgasbehandlungsanordnung 128 angeordnet ist. Diese kann beispielsweise einen Partikelfilter, einen Katalysator, wie z. B. Oxidationskatalysator, SCR-Katalysator beispielsweise an einem Partikelfilter, Mager-Stickoxid-Falle (Lean-NOₓ-Trap LNT), Passiv-Stickoxid-Absorber (PNA), Dreiwegekatalysator, Vierwegekatalysator, oder mehrere derartige Systembereiche umfassen. In der Abgas-Hauptströmungsrichtung H stromaufwärts bezüglich der Abgasbehandlungsanordnung 128 ist der Abgasheizer 12 mit den beiden in Strömungsrichtung aufeinander folgenden Heizleitern 66, 68 an der nur prinzipartig dargestellten Trägerstruktur 16 vorgesehen. Das in der Abgas-Hauptströmungsrichtung H auf den Abgasheizer 12 zu strömende Abgas kann insbesondere am Beginn des Verbrennungsbetriebs einer Brennkraftmaschine durch Anlegen einer elektrischen Spannung an die Heizleiter 66, 68 im Bereich des Abgasheizers 12 Wärme aufnehmen und diese in die stromabwärts dann folgende Abgasbehandlungsanordnung 128 eintragen. Diese wird somit vor allem auch am Beginn des Verbrennungsbetriebs sehr schnell auf eine zur Durchführung der darin vorzusehenden Reaktion, beispielsweise einer katalytischen Reaktion, erforderliche Temperatur erwärmt. Grundsätzlich ist auch die Integration eines derartigen Abgasheizers 12 zwischen zwei in Strömungsrichtung aufeinanderfolgende Abgasbehandlungsanordnungen, beispielsweise Katalysatoren, möglich, wobei insbesondere die stromaufwärts bezüglich eines derart angeordneten Abgasheizers 12 angeordnete Abgasbehandlungsanordnung durch von dem Abgasheizer 12 abgegebene Strahlungswärme erwärmt wird.

Es ist abschließend darauf hinzuweisen, dass bei dem vorangehend beschriebenen Abgasheizer im Umfang der vorliegenden Erfindung verschiedenste Variationen vorgenommen werden können. So können beispielsweise auch mehr als zwei Heizleiter in Strömungsrichtung aufeinanderfolgend angeordnet sein, wobei beispielsweise einige dieser Heizleiter dann seriell zueinander und einige dieser Heizleiter parallel zueinander geschaltet sein können. Ebenso wie bei den vorangehend beschriebenen Ausgestaltungsformen kann auch bei Ausgestaltung des Abgasheizers mit mehr als zwei Heizleitern vorgesehen sein, dass die einzelnen Heizleiter sich hinsichtlich ihrer Geometrie, also des Verlaufs der Leiterbereiche derselben, unterscheiden, um eine im Wesentlichen deckungsgleiche Positionierung zweier in Strömungsrichtung aufeinander folgender Heizleiter zu vermeiden und somit eine effiziente thermische Wechselwirkung zwischen diesen und dem Abgas zu gewährleisten. Auch der Verlauf der Leiterbereiche der einzelnen Heizleiter kann von den vorangehend beschriebenen bzw. den in dem Figuren dargestellten Verlauf abweichen. So können dort, wo aufgrund der Strömungscharakteristik in einem Abgasführungsgehäuse dies erforderlich ist, mehr bzw. eine größere Dichte von Leiterbereichen bzw. Windungsabschnitten vorgesehen sein, als in anderen Bereichen. Auch können zur Anpassung an die Strömungsverhältnisse die Leiterbereiche der Heizleiter eine variierende Breite und ggf. auch eine variierende Dicke aufweisen, um dadurch den elektrischen Widerstand und die bei Anlegen einer elektrischen Spannung lokal entstehende Wärme definiert einstellen zu können und insbesondere lokale Überhitzungsbereiche vermeiden zu können.

## Patentansprüche

1. Abgasheizer für eine Abgasanlage einer Brennkraftmaschine, umfassend eine Trägeranordnung (16) und eine an der Trägeranordnung (16) getragene, vom Abgas in einer Abgas-Hauptströmungsrichtung (H) durchströmbare Heizleiteranordnung (14) mit wenigstens einen stromdurchflossenen Heizleiter (66, 68), wobei der wenigstens eine Heizleiter (66, 68) durch Heraustrennen aus einem Metall-Flachmaterial bereitgestellt ist, **dadurch gekennzeichnet daß**:
- die Heizleiteranordnung (14) wenigstens zwei in der Abgas-Hauptströmungsrichtung (H) aufeinander folgend angeordnete Heizleiter (66, 68) umfasst,
oder/und
- die Trägeranordnung (16) wenigstens ein Trägerelement (18, 20) mit einem bezüglich einer Abgasheizer-Mittenachse (A) radial außen liegenden, zur Festlegung an einem Abgasführungsgehäuse (10) ausgebildeten Befestigungsbereich (38) umfasst, wobei der Befestigungsbereich (38) einen radial außen liegenden Leiterbereich (120) wenigstens eines Heizleiters (66, 68) der Heizleiteranordnung (14) in wenigstens einem, vorzugsweise mehreren Umfangsbereichen wenigstens teilweise nicht radial überlappt.

2. Abgasheizer nach Anspruch 1, **dadurch gekennzeichnet, dass** wenigstens ein, vorzugsweise jeder Heizleiter (66, 68) der Heizleiteranordnung (14) wenigstens bereichsweise windungsartig sich erstreckend ausgebildet ist, oder/und dass wenigstens ein, vorzugsweise jeder Heizleiter (66, 68) der Heizleiteranordnung (14) wenigstens ein Mäander-Windungsfeld (70, 72, 74, 76, 78, 80), vorzugsweise eine Mehrzahl von in Umfangsrichtung aufeinander folgenden Mäander-Windungsfeldern (70, 72, 74, 76, 78, 80), umfasst, wobei jedes Mäander-Windungsfeld (70, 72, 74, 76, 78, 80) eine Mehrzahl von bezüglich der Abgasheizer-Mittenachse (A) radial aufeinander folgend angeordneten, im Wesentlichen in Umfangsrichtung sich erstreckenden Mäander-Windungsabschnitten (82, 84, 86, 88, 90) umfasst, wobei wenigstens ein, vorzugsweise mehrere Mäander-Windungsabschnitte (82, 84, 86, 88, 90) in einem ersten Umfangsende an einen radial weiter innen positionierten Mäander-Windungsabschnitt (84, 86, 88, 90) anschließen oder/und in einem zweiten Umfangsende an einen radial weiter außen positionierten Mäander-Windungsabschnitt (82, 84, 86, 88) anschließen.

3. Abgasheizer nach Anspruch 1 oder 2, **dadurch gekennzeichnet, dass** bei Ausgestaltung der Heizleiteranordnung (12) mit wenigstens zwei in der Abgas-Hauptströmungsrichtung (H) aufeinanderfolgend angeordneten Heizleitern (66, 68) wenigstens zwei Heizleiter (66, 68) zueinander elektrisch seriell geschaltet sind oder/und wenigstens zwei Heizleiter zueinander elektrisch parallel geschaltet sind.

4. Abgasheizer nach Anspruch 2 und Anspruch 3, **dadurch gekennzeichnet, dass** bei einem ersten Heizleiter (66) der wenigstens zwei Heizleiter (66, 68) ein radial äußerer Mäander-Windungsabschnitt (82) eines Mäander-Windungsfelds (70) einen ersten Anschlussbereich (92) des ersten Heizleiters (66) bereitstellt und ein radial äußerer Mäander-Windungsabschnitt (82) eines anderen Mäander-Windungsfelds (80) einen zweiten Anschlussbereich (94) des ersten Heizleiters (66) bereitstellt, dass bei einem zweiten Heizleiter (68) der wenigstens zwei Heizleiter (68, 88) ein radial äußerer Mäander-Windungsabschnitt (82) eines Mäander-Windungsfelds (70) einen ersten Anschlussbereich (96) des zweiten Heizleiters (68) bereitstellt und ein radial äußerer Mäander-Windungsabschnitt (82) eines anderen Mäander-Windungsfelds (80) einen zweiten Anschlussbereich (98) des zweiten Heizleiters (68) bereitstellt, und dass bei dem ersten Heizleiter (66) und dem zweiten Heizleiter (68) jeweils wenigstens ein Anschlussbereich von erstem Anschlussbereich (92, 96) und zweitem Anschlussbereich (94, 98) einen Spannungsquellen-Anschlussbereich zum Anschluss der Heizleiteranordnung (14) an eine Spannungsquelle bereitstellt oder/und bei dem ersten Heizleiter (66) und dem zweiten Heizleiter (68) jeweils ein Anschlussbereich von erstem Anschlussbereich (92, 96) und zweitem Anschlussbereich (94, 98) einen Verbindungs-Anschlussbereich zur seriellen elektrischen Verbindung des ersten Heizleiters (66) mit dem zweiten Heizleiter (68) bereitstellt.

5. Abgasheizer nach einem der vorangehenden Ansprüche, **dadurch gekennzeichnet, dass** bei Ausgestaltung der Heizleiteranordnung (14) mit wenigstens zwei in der Abgas-Hauptströmungsrichtung (H) aufeinander folgend angeordneten Heizleitern (66, 68) wenigstens zwei Heizleiter (66, 68) quer zur Abgas-Hauptströmungsrichtung (H) zueinander nicht deckungsgleich sind oder/und die in der Abgas-Hauptströmungsrichtung (H) aufeinander folgenden Heizleiter (66, 68) der Heizleiteranordnung (14) zwischen Trägerelementen (18, 20) der Trägeranordnung (16) getragen sind.

6. Abgasheizer nach Anspruch 2 und Anspruch 5, **dadurch gekennzeichnet, dass** bei wenigstens einem, vorzugsweise jedem Mäander-Windungsfeld (70, 72, 74, 76, 78, 80) wenigstens ein, vorzugsweise eine Mehrzahl von Mäander-Windungsabschnitten (82, 84, 86, 88, 90) von einem der Heizleiter (66, 68) zu einem in der Abgas-Hauptströmungsrichtung (H) folgenden Mäander-Windungsabschnitt (82, 84, 86, 88, 90) eines anderen der Heizleiter (66, 68) quer zur Abgas-Hauptströmungsrichtung (H) nicht deckungsgleich ist.

7. Abgasheizer nach einem der vorangehenden Ansprüche, **dadurch gekennzeichnet, dass** bei Ausgestaltung der Heizleiteranordnung (14) mit wenigstens zwei in der Abgas-Hauptströmungsrichtung (H) aufeinander folgend angeordneten Heizleitern (66, 68) wenigstens zwei Heizleiter (66, 68) durch wenigstens ein, vorzugsweise eine Mehrzahl von Verstrebungselementen (130; 130') bezüglich einander abgestützt sind.

8. Abgasheizer nach Anspruch 2 und Anspruch 7, **dadurch gekennzeichnet, dass** wenigstens ein, vorzugsweise jedes Verstrebungselement (130; 130') sich zwischen Mäander-Windungsabschnitten (82, 84, 86, 88, 90) zweier Heizleiter (66,68) erstreckt.

9. Abgasheizer nach einem der vorangehenden Ansprüche, **dadurch gekennzeichnet, dass** bei Ausgestaltung wenigstens eines Trägerelements (18, 20) mit einen radial außen liegenden Leiterbereich (120) wenigstens eines Heizleiters (66, 68) der Heizleiteranordnung (14) in wenigstens einem Umfangsbereich wenigstens teilweise nicht radial überlappendem Befestigungsbereich (38) das wenigstens eine Trägerelement (18, 20) eine Mehrzahl von in Umfangsrichtung mit Abstand zueinander angeordneten und radial außen jeweils einen Befestigungsabschnitt (40, 42, 44, 46, 48, 50) des Befestigungsbereichs (38) bereitstellenden Trägerarmen (24, 26, 28, 30, 32, 34, 36) umfasst.

10. Abgasheizer nach Anspruch 9, **dadurch gekennzeichnet, dass** zwischen den Befestigungsabschnitten (40, 42, 44, 46, 48, 50) wenigstens zweier in Umfangsrichtung aufeinander folgender Trägerarme (24, 26, 28, 30, 32, 34, 36), vorzugsweise aller in Umfangsrichtung aufeinander folgender Trägerarme (24, 26, 28, 30, 32, 34, 36), in Umfangsrichtung keine Verbindung besteht.

11. Abgasheizer nach Anspruch 9 oder 10, **dadurch gekennzeichnet, dass** die Befestigungsabschnitte (40, 42, 44, 46, 48, 50) wenigstens zweier in Umfangsrichtung aufeinander folgender Trägerarme (24, 26, 28, 30, 32, 34, 36), vorzugsweise aller in Umfangsrichtung aufeinander folgender Trägerarme (24, 26, 28, 30, 32, 34, 36), in Umfangsrichtung durch einen Befestigungsrand (54, 56, 58, 60, 62, 64) miteinander verbunden sind.

12. Abgasheizer nach einem der Ansprüche 9-11, **dadurch gekennzeichnet, dass** die Trägerarme (24, 26, 28, 30, 32, 34, 36) des wenigstens einen Trägerelements (18, 20) von einem Zentralbereich (22) des wenigstens einen Trägerelements (18, 20) sich nach radial außen erstrecken, oder/und dass wenigstens an einem Teil der Trägerarme (24, 26, 28, 30, 32, 34, 36) des wenigstens einen Trägerelements (18, 20) oder/und einem Zentralbereich (22) des wenigstens einen Trägerelements (18, 20) wenigstens eine Verbindungsformation (106) zum festen Verbinden des wenigstens einen Trägerelements (18, 20) mit der Heizleiteranordnung (14) vorgesehen ist.

13. Abgasheizer nach einem der Ansprüche 9-12, **dadurch gekennzeichnet, dass** wenigstens Heizleiter (66, 68) in einem von einem Trägerarm (24, 26, 28, 30, 32, 34, 36) überdeckten Bereich eine größere Leiter-Querschnittsfläche aufweist, als in einem nicht von einem Trägerarm (24, 26, 28, 30, 32, 34, 36) überdeckten Bereich.

14. Abgasheizer nach einem der Ansprüche 9-13, **dadurch gekennzeichnet, dass** ein stromaufwärtiges Trägerelement (18) und ein stromabwärtiges Trägerelement (20) vorgesehen sind, wobei die Heizleiteranordnung (14) in der Abgas-Hauptströmungsrichtung (H) zwischen dem stromaufwärtigen Trägerelement (18) und dem stromabwärtigen Trägerelement (20) angeordnet ist.

15. Abgasheizer einem der Ansprüche 9-14, **dadurch gekennzeichnet, dass** wenigstens ein Trägerelement (18) wenigstens einen Spannungsquellen-Anschlussbereich der Heizleiteranordnung (14) gegen eine direkte Abgasanströmung im Wesentlichen abschirmt.

16. Abgasheizanordnung für eine Abgasanlage einer Brennkraftmaschine, umfassend wenigstens einen an einem Abgasführungsgehäuse (10) getragenen Abgasheizer (12) nach einem der vorangehenden Ansprüche.

17. Abgasanlage für eine Brennkraftmaschine, umfassend wenigstens einen in einem Abgasführungsgehäuse (10) angeordneten Abgasheizer (12) nach einem der Ansprüche 1-15 und stromabwärts bezüglich des Abgasheizers (12) wenigstens eine Abgasbehandlungsanordnung (128).

## Claims

1. Exhaust gas heater for an exhaust gas system of an internal combustion engine, comprising a support arrangement (16) and a heating conductor arrangement (14) which is supported on the support arrangement (16) and through which the exhaust gas can flow in an exhaust gas main flow direction (H) and has at least one current-carrying heating conductor (66, 68), wherein the at least one heating conductor (66, 68) is provided by cutting it out of a flat metal material, **characterised in that**
- the heating conductor arrangement (14) comprises at least two heating conductors (66, 68) arranged consecutively in the exhaust gas main flow direction (H),
or/and
- the support arrangement (16) comprises at least one support element (18, 20) with a fastening region (38) located radially on the outside with respect to an exhaust gas heater centre axis (A), designed for fastening to an exhaust gas guide housing (10), wherein the fastening region (38) at least partially does not radially overlap a radially outer conductor region (120) of at least one heating conductor (66, 68) of the heating conductor arrangement (14) in at least one, preferably several, circumferential regions.

2. Exhaust gas heater according to claim 1, **characterised in that** at least one, preferably each, heating conductor (66, 68) of the heating conductor arrangement (14) is designed to extend in a winding-like manner at least in certain regions, or/and **in that** at least one, preferably each, heating conductor (66, 68) of the heating conductor arrangement (14) comprises at least one meander winding field (70, 72, 74, 76, 78, 80), preferably a plurality of meander winding fields (70, 72, 74, 76, 78, 80) following one another in the circumferential direction, wherein each meander winding field (70, 72, 74, 76, 78, 80) comprises a plurality of meander winding sections (82, 84, 86, 88, 90) arranged radially consecutively with respect to the exhaust gas heater centre axis (A) and extending substantially in the circumferential direction, wherein at least one, preferably several, meander winding sections (82, 84, 86', 88, 90) in a first circumferential end connect to a meander winding section (84, 86, 88, 90) positioned radially further inwards or/and in a second circumferential end connect to a meander winding section (82, 84, 86, 88) positioned radially further outwards.

3. Exhaust gas heater according to claim 1 or 2, **characterised in that**, when the heating conductor arrangement (12) is designed with at least two heating conductors (66, 68) arranged consecutively in the exhaust gas main flow direction (H), at least two heating conductors (66, 68) are electrically connected in series with one another or/and at least two heating conductors are electrically connected in parallel with one another.

4. Exhaust gas heater according to claim 2 and claim 3, **characterised in that**, in a first heating conductor (66) of the at least two heating conductors (66, 68), a radially outer meander winding section (82) of a meander winding field (70) provides a first connection region (92) of the first heating conductor (66) and a radially outer meander winding section (82) of another meander winding field (80) provides a second connection region (94) of the first heating conductor (66), **in that**, in a second heating conductor (68) of the at least two heating conductors (68, 88), a radially outer meander winding section (82) of a meander winding field (70) provides a first connection region (96) of the second heating conductor (68) and a radially outer meander winding section (82) of another meander winding field (80) provides a second connection region (98) of the second heating conductor (68), and **in that**, in the first heating conductor (66) and the second heating conductor (68), in each case at least one connection region out of the first connection region (92, 96) and the second connection region (94, 98) provides a voltage source connection region for connecting the heating conductor arrangement (14) to a voltage source or/and, in the first heating conductor (66) and the second heating conductor (68), in each case one connection region out of the first connection region (92, 96) and the second connection area (94, 98) provides a connecting connection area for the serial electrical connection of the first heating conductor (66) to the second heating conductor (68).

5. Exhaust gas heater according to one of the preceding claims, **characterised in that**, when the heating conductor arrangement (14) is designed with at least two heating conductors (66, 68) arranged consecutively in the exhaust gas main flow direction (H), at least two heating conductors (66, 68) are not congruent with one another transversely to the exhaust gas main flow direction (H) or/and the heating conductors (66, 68) of the heating conductor arrangement (14) which follow one another in the exhaust gas main flow direction (H) are supported between support elements (18, 20) of the support arrangement (16).

6. Exhaust gas heater according to claim 2 and claim 5, **characterised in that** in at least one, preferably each meander winding section (70, 72, 74, 76, 78, 80) at least one, preferably a plurality of meander winding sections (82, 84, 86, 88, 90) of one of the heating conductors (66, 68) to a meandering winding section (82, 84, 86, 88, 90) of another of the heating conductors (66, 68) following in the main exhaust gas flow direction (H) is not congruent transversely to the main exhaust gas flow direction (H).

7. Exhaust gas heater according to one of the preceding claims, **characterised in that**, when the heating conductor arrangement (14) is designed with at least two heating conductors (66, 68) arranged consecutively in the exhaust gas main flow direction (H), at least two heating conductors (66, 68) are supported with respect to one another by at least one, preferably a plurality, of bracing elements (130; 130').

8. Exhaust gas heater according to claim 2 and claim 7, **characterised in that** at least one, preferably each, bracing element (130, 130') extends between meandering winding sections (82, 84, 86, 88, 90) of two heating conductors (66, 68).

9. Exhaust gas heater according to one of the preceding claims, **characterised in that**, when at least one support element (18, 20) is designed with a radially outer conductor region (120) of at least one heating conductor (66, 68) of the heating conductor arrangement (14) in at least one circumferential region at least partially not radially overlapping fastening region (38), the at least one support element (18, 20) comprises a plurality of support arms (24, 26, 28, 30, 32, 34, 36) which are arranged at a distance from one another in the circumferential direction and each provide a fastening section (40, 42, 44, 46, 48, 50) of the fastening region (38) radially on the outside.

10. Exhaust gas heater according to claim 9, **characterised in that** there is no connection in the circumferential direction between the fastening portions (40, 42, 44, 46, 48, 50) of at least two support arms (24, 26, 28, 30, 32, 34, 36) following one another in the circumferential direction, preferably of all support arms (24, 26, 28, 30, 32, 34, 36) following one another in the circumferential direction.

11. Exhaust gas heater according to claim 9 or 10, **characterised in that** the fastening sections (40, 42, 44, 46, 48, 50) of at least two support arms (24, 26, 28, 30, 32, 34, 36) following one another in the circumferential direction, preferably of all support arms (24, 26, 28, 30, 32, 34, 36) following one another in the circumferential direction, are connected to one another in the circumferential direction by a fastening edge (54, 56, 58, 60, 62, 64).

12. Exhaust gas heater according to one of claims 9-11, **characterised in that** the support arms (24, 26, 28, 30, 32, 34, 36) of the at least one support element (18, 20) extend radially outwards from a central region (22) of the at least one support element (18, 20), or/and **in that** at least on a part of the support arms (24, 26, 28, 30, 32, 34, 36) of the at least one support element (18, 20) or/and a central region (22) of the at least one support element (18, 20) is provided with at least one connecting formation (106) for firmly connecting the at least one support element (18, 20) to the heating conductor arrangement (14).

13. Exhaust gas heater according to one of claims 9-12, **characterised in that** at least one heating conductor (66, 68) has a larger conductor cross-sectional area in a region covered by a support arm (24, 26, 28, 30, 32, 34, 36) than in a region not covered by a support arm (24, 26, 28, 30, 32, 34, 36).

14. Exhaust gas heater according to one of claims 9-13, **characterised in that** an upstream support element (18) and a downstream support element (20) are provided, wherein the heating conductor arrangement (14) is arranged in the main exhaust gas flow direction (H) between the upstream support element (18) and the downstream support element (20).

15. Exhaust gas heater according to any of claims 9-14, **characterised in that** at least one support element (18) substantially shields at least one voltage source connection region of the heating conductor arrangement (14) against a direct flow of exhaust gas.

16. Exhaust gas heating arrangement for an exhaust gas system of an internal combustion engine, comprising at least one exhaust gas heater (12) carried on an exhaust gas guide housing (10) according to one of the preceding claims.

17. Exhaust gas system for an internal combustion engine, comprising at least one exhaust gas heater (12) arranged in an exhaust gas guide housing (10) according to one of claims 1-15 and, downstream with respect to the exhaust gas heater (12), at least one exhaust gas treatment arrangement (128).

## Revendications

1. Chauffage de gaz d'échappement pour un système de gaz d'échappement d'un moteur à combustion interne, comprenant un agencement de support (16) et un agencement de conducteur de chauffage (14) qui est supporté par l'agencement de support (16) et à travers lequel les gaz d'échappement peuvent circuler dans une direction principale d'écoulement des gaz d'échappement (H) et qui comporte au moins un conducteur de chauffage porteur de courant (66, 68), dans lequel ledit au moins un conducteur de chauffage (66, 68) est fourni en le découpant dans un matériau métallique plat, **caractérisé en ce que**
- l'agencement de conducteur de chauffage (14) comprend au moins deux conducteurs de chauffage (66, 68) disposés consécutivement dans la direction principale d'écoulement des gaz d'échappement (H),
ou/et
- l'agencement de support (16) comprend au moins un élément de support (18, 20) avec une région de fixation (38) située radialement à l'extérieur par rapport à l'axe central du dispositif de chauffage de gaz d'échappement (A) et conçue pour être fixée à un boîtier de guidage des gaz d'échappement (10), dans lequel la région de fixation (38) ne chevauche pas, au moins partiellement, une région de conducteur radialement extérieure (120) d'au moins un conducteur de chauffage (66, 68) de l'agencement de conducteur de chauffage (14) dans au moins une, et de préférence plusieurs, régions circonférentielles.

2. Chauffage de gaz d'échappement selon la revendication 1, **caractérisé en ce qu'**au moins un, de préférence chaque, conducteur de chauffage (66, 68) de l'agencement de conducteur de chauffage (14) est conçu pour s'étendre en forme d'enroulement au moins dans certaines régions, ou/et **en ce qu'**au moins un, de préférence chaque, conducteur de chauffage (66, 68) de l'agencement de conducteur de chauffage (14) comprend au moins un champ d'enroulement en méandre (70, 72, 74, 76, 78, 80), de préférence une pluralité de champs d'enroulement en méandre (70, 72, 74, 76, 78, 80) se succédant dans la direction circonférentielle, dans lequel chaque champ d'enroulement en méandre (70, 72, 74, 76, 78, 80) comprend une pluralité de sections d'enroulement en méandre (82, 84, 86, 88, 90) disposées radialement consécutivement par rapport à l'axe central du dispositif de chauffage de gaz d'échappement (A) et s'étendant essentiellement dans la direction circonférentielle, dans lequel au moins une, de préférence plusieurs sections d'enroulement en méandre (82, 84, 86, 88, 90) dans une première extrémité circonférentielle se connectent à une section d'enroulement en méandre (84, 86, 88, 90) positionnée radialement plus à l'intérieur ou/et dans une deuxième extrémité circonférentielle se connectent à une section d'enroulement en méandre (82, 84, 86, 88) positionnée radialement plus à l'extérieur.

3. Chauffage de gaz d'échappement selon la revendication 1 ou 2, **caractérisé en ce que**, lorsque l'agencement de conducteur de chauffage (12) est conçu avec au moins deux conducteurs de chauffage (66, 68) disposés consécutivement dans la direction principale d'écoulement des gaz d'échappement (H), au moins deux conducteurs de chauffage (66, 68) sont connectés électriquement en série l'un avec l'autre ou/et au moins deux conducteurs de chauffage sont connectés électriquement en parallèle l'un avec l'autre.

4. Chauffage de gaz d'échappement selon la revendication 2 et la revendication 3, **caractérisé en ce que**, dans un premier conducteur de chauffage (66) desdits au moins deux conducteurs de chauffage (66, 68), une section d'enroulement en méandre radialement extérieure (82) d'un champ d'enroulement en méandre (70) fournit une première région de connexion (92) du premier conducteur de chauffage (66) et une section d'enroulement en méandre radialement extérieure (82) d'un autre champ d'enroulement en méandre (80) fournit une deuxième région de connexion (94) du premier conducteur de chauffage (66), **en ce que**, dans un deuxième conducteur de chauffage (68) desdits au moins deux conducteurs de chauffage (68, 88), une section d'enroulement en méandre radialement extérieure (82) d'un champ d'enroulement en méandre (70) fournit une première région de connexion (96) du deuxième conducteur de chauffage (68) et une section d'enroulement en méandre radialement extérieure (82) d'un autre champ d'enroulement en méandre (80) fournit une deuxième région de connexion (98) du deuxième conducteur de chauffage (68), et **en ce que**, dans le premier conducteur de chauffage (66) et le deuxième conducteur de chauffage (68), respectivement, au moins une région de connexion parmi la première région de connexion (92, 96) et la deuxième région de connexion (94, 98) fournit une région de connexion de source de tension pour connecter l'agencement de conducteur de chauffage (14) à une source de tension ou/et, dans le premier conducteur de chauffage (66) et le deuxième conducteur de chauffage (68), respectivement, une région de connexion parmi la première région de connexion (92, 96) et la deuxième région de connexion (94, 98) fournit une région de connexion connectant pour la connexion électrique en série du premier conducteur de chauffage (66) au deuxième conducteur de chauffage (68).

5. Chauffage de gaz d'échappement selon l'une des revendications précédentes, **caractérisé en ce que**, lorsque l'agencement de conducteur de chauffage (14) est conçu avec au moins deux conducteurs de chauffage (66, 68) disposés consécutivement dans la direction principale d'écoulement des gaz d'échappement (H), au moins deux conducteurs de chauffage (66, 68) ne sont pas congruents l'un avec l'autre transversalement à la direction principale d'écoulement des gaz d'échappement (H) ou/et les conducteurs de chauffage (66, 68) de l'agencement de conducteur de chauffage (14) qui se suivent dans la direction principale d'écoulement des gaz d'échappement (H) sont soutenus entre des éléments de support (18, 20) de l'agencement de support (16).

6. Chauffage de gaz d'échappement selon la revendication 2 et la revendication 5, **caractérisé en ce que** dans au moins une, de préférence chaque section d'enroulement en méandre (70, 72, 74, 76, 78, 80) au moins une, de préférence une pluralité de sections d'enroulement en méandre (82, 84, 86, 88, 90) de l'un des conducteurs chauffants (66, 68) à une section d'enroulement en méandre (82, 84, 86, 88, 90) d'un autre des conducteurs chauffants (66, 68) suivant dans la direction principale d'écoulement des gaz d'échappement (H) n'est pas congruente transversalement à la direction principale d'écoulement des gaz d'échappement (H).

7. Chauffage de gaz d'échappement selon l'une des revendications précédentes, **caractérisé en ce que**, lorsque l'agencement de conducteur de chauffage (14) est conçu avec au moins deux conducteurs de chauffage (66, 68) disposés consécutivement dans la direction principale d'écoulement des gaz d'échappement (H), au moins deux conducteurs de chauffage (66, 68) sont soutenus l'un par rapport à l'autre par au moins un, de préférence une pluralité, d'éléments d'entretoisement (130 ; 130').

8. Chauffage de gaz d'échappement selon la revendication 2 et la revendication 7, **caractérisé en ce qu'**au moins un, de préférence chaque, élément d'entretoisement (130, 130') s'étend entre les sections d'enroulement en méandre (82, 84, 86, 88, 90) de deux conducteurs chauffants (66, 68).

9. Chauffage de gaz d'échappement selon l'une des revendications précédentes, **caractérisé en ce que**, lorsqu'au moins un élément de support (18, 20) est conçu avec une région de conducteur radialement extérieure (120) d'au moins un conducteur de chauffage (66, 68) de l'agencement de conducteur de chauffage (14) dans au moins une région circonférentielle au moins partiellement non radialement superposée à la région de fixation (38), ledit au moins un élément de support (18, 20) comprend une pluralité de bras de support (24, 26, 28, 30, 32, 34, 36) qui sont disposés à distance les uns des autres dans la direction circonférentielle et qui fournissent chacun une section de fixation (40, 42, 44, 46, 48, 50) de la région de fixation (38) radialement à l'extérieur.

10. Chauffage de gaz d'échappement selon la revendication 9, **caractérisé en ce qu'**il n'y a pas de connexion dans la direction circonférentielle entre les parties de fixation (40, 42, 44, 46, 48, 50) d'au moins deux bras de support (24, 26, 28, 30, 32, 34, 36) se succédant dans la direction circonférentielle, de préférence de tous les bras de support (24, 26, 28, 30, 32, 34, 36) se succédant dans la direction circonférentielle.

11. Chauffage de gaz d'échappement selon la revendication 9 ou 10, **caractérisé en ce que** les sections de fixation (40, 42, 44, 46, 48, 50) d'au moins deux bras de support (24, 26, 28, 30, 32, 34, 36) se suivant dans la direction circonférentielle, de préférence de tous les bras de support (24, 26, 28, 30, 32, 34, 36) se suivant dans la direction circonférentielle, sont reliées l'une à l'autre dans la direction circonférentielle par un bord de fixation (54, 56, 58, 60, 62, 64).

12. Chauffage de gaz d'échappement selon l'une des revendications 9 à 11, **caractérisé en ce que** les bras de support (24, 26, 28, 30, 32, 34, 36) dudit au moins un élément de support (18, 20) s'étendent radialement vers l'extérieur à partir d'une région centrale (22) dudit au moins un élément de support (18, 20), ou/et **en ce qu'**au moins sur une partie des bras de support (24, 26, 28, 30, 32, 34, 36) dudit au moins un élément de support (18, 20) ou/et qu'une région centrale (22) dudit au moins un élément de support (18, 20) est pourvue d'au moins une formation de connexion (106) pour connecter fermement ledit au moins un élément de support (18, 20) à l'agencement de conducteur de chauffage (14).

13. Chauffage de gaz d'échappement selon l'une des revendications 9 à 12, **caractérisé en ce qu'**au moins un conducteur de chauffage (66, 68) a une plus grande surface de section transversale de conducteur dans une région couverte par un bras de support (24, 26, 28, 30, 32, 34, 36) que dans une région non couverte par un bras de support (24, 26, 28, 30, 32, 34, 36).

14. Chauffage de gaz d'échappement selon l'une des revendications 9 à 13, **caractérisé en ce qu'**un élément de support en amont (18) et un élément de support en aval (20) sont prévus, dans lequel l'agencement de conducteur de chauffage (14) est disposé dans la direction principale d'écoulement des gaz d'échappement (H) entre l'élément de support en amont (18) et l'élément de support en aval (20).

15. Chauffage de gaz d'échappement selon l'une des revendications 9 à 14, **caractérisé en ce qu'**au moins un élément de support (18) protège substantiellement au moins une région de connexion de source de tension de l'agencement de conducteur de chauffage (14) contre un flux direct de gaz d'échappement.

16. Dispositif de chauffage de gaz d'échappement pour un système de gaz d'échappement d'un moteur à combustion interne, comprenant au moins un chauffage de gaz d'échappement (12) porté par un boîtier de guidage des gaz d'échappement (10) selon l'une des revendications précédentes.

17. Système de gaz d'échappement pour un moteur à combustion interne, comprenant au moins un chauffage de gaz d'échappement (12) disposé dans un boîtier de guidage des gaz d'échappement (10) selon l'une des revendications 1 à 15 et, en aval du chauffage de gaz d'échappement (12), au moins un dispositif de traitement des gaz d'échappement (128).
